(19) **Europäisches Patentamt / European Patent Office / Office européen des brevets**

(11) **EP 4 382 860 A1**

(12) **EUROPEAN PATENT APPLICATION**
published in accordance with Art. 153(4) EPC

(43) Date of publication:
**12.06.2024 Bulletin 2024/24**

(21) Application number: **22877793.4**

(22) Date of filing: **18.07.2022**

(51) International Patent Classification (IPC):
*G01C 1/00* (2006.01)     *G01S 13/91* (2006.01)
*G01S 7/02* (2006.01)     *H04L 67/12* (2022.01)

(86) International application number:
**PCT/CN2022/106191**

(87) International publication number:
**WO 2023/056769 (13.04.2023 Gazette 2023/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.10.2021   CN 202111167998**

(71) Applicant: **CCCC First Highway Consultants Co. Ltd.**
**Xi'an, Shaanxi 710068 (CN)**

(72) Inventors:
• **LIU, Jianbei**
  **Xi'an, Shaanxi 710068 (CN)**
• **ZHAO, Bin**
  **Xi'an, Shaanxi 710068 (CN)**

• **WU, Mingxian**
  **Xi'an, Shaanxi 710068 (CN)**
• **MA, Xiaolong**
  **Xi'an, Shaanxi 710068 (CN)**
• **WANG, Zuo**
  **Xi'an, Shaanxi 710068 (CN)**
• **MA, Yuanyuan**
  **Xi'an, Shaanxi 710068 (CN)**
• **LUO, Zhongbin**
  **Xi'an, Shaanxi 710068 (CN)**
• **HE, Guixi**
  **Xi'an, Shaanxi 710068 (CN)**
• **SONG, Haojie**
  **Xi'an, Shaanxi 710068 (CN)**

(74) Representative: **Lermer, Christoph**
**Nove Haus - Design Offices**
**Luise-Ullrich-Straße 14**
**80636 München (DE)**

(54) **APPARATUS FOR INSTALLING RADAR-VIDEO INTEGRATED MACHINE FOR ROAD, AND USING METHOD AND NETWORKING INSTALLATION METHOD THEREFOR**

(57)     Disclosed in the present invention are an apparatus for installing a radar-video integrated machine for a road, and a using method and networking installation method therefor, which are applied to the technical field of roads. The apparatus comprises: a measurement apparatus, which is installed on a radar-video integrated machine, and a monitor apparatus, which is located on the ground, wherein the measurement apparatus comprises a first central controller, an angle collection sensor, a first status indicator lamp, a first wireless communication module and a first display module; the monitor apparatus comprises a second central controller, a key module, a second status indicator lamp, a second wireless communication module and a second display module; the measurement apparatus and the monitor apparatus are in communication connection and transmit data to each other; a technician performs data input and monitoring by means of the monitor apparatus; and an installer performs angle adjusting by means of the measurement apparatus. A radar-video integrated machine is installed by means of the method, such that adjusting and installation can be rapidly performed, the adjusting time is shortened to be within two minutes, the time is saved on by more than 85%, and the installation precision of the radar-video integrated machine is also improved.

Fig. 2

EP 4 382 860 A1

**Description**

Technical Field

The invention relate to that technical field of the installation of aradar-video integrated machine for road, in particular toapparatus for installing radar-video integrated machine for road, and using method and networking installation method.

Background Art

The radar-video integrated machine is used for all-weather and all-time detection of road traffic operation state, such as measuring parameters such as traffic flow and speed. In order to obtain the continuous running state of vehicles, a certain number of detectors will be arranged along the expressway. If the arrangement position or mounting angle is not appropriate, there may be detection blind spots, resulting in discontinuous detection data. In the prior art, the use of a single radar or video sensor has many problems such as collection blind areas, easy occurrence of cross sections, inability to continuously collect data, etc. However, the adoption of theradar-video integrated sensor can overcome the shortcomings of traditional detection sensors, obtain the continuous driving trajectory of vehicles on the expressway, and facilitate managers to master more accurate traffic information. As a new type of traffic detection equipment, the radar-video integrated machine also faces the problems of complicated and time-consuming installation process in the actual installation process. In the installation process, it is necessary to close the driveway, especially the tunnel road closure construction, and it is necessary to apply to the relevant traffic management department in advance. After the approval, it is necessary to make an announcement to the passing social vehicles in advance, which takes a long time and has a large impact on the construction, and may even cause serious traffic congestion.

In the prior art, when installing the radar-video integrated machine for road, it is necessary to lift the installer to the installation height with the help of the construction truck, and the technician gives guidance to the installer, and the installer is located on the truck and the technician is located on the ground. At least two people need to cooperate in the installation and adjusting, and the technician and the installer are linked by shouting or giving instructions to the installer, which is inconvenient to communicate and takes a long time. When installing and adjusting, the installer sets an initial angle in advance according to the experience, and then the radar-video integrated machine collects the data of passing vehicles. The technician judges the adjustment mode of the radar-video integrated machine through the vehicle trajectory picture displayed by the upper computer, and feeds back the information to the installer. The installer adjusts it again, and it needs to be adjusted many times to avoid the detection blind spot. Finally, the technician determines whether it meets the requirements, and after the angle adjusting is completed and the installation requirements are met, the installer fixes the position of the radar-video integrated machine and does not change it. The whole process has high requirements for installation and adjusting. For the installers, it is difficult to accurately adjust the radar-video integrated machine in place. Because of the uneven level of the installers, the adjusting results of each person are different, and the mounting angle is easy to be over-adjusted and adjusted repeatedly. However, every time the angle is rotated, the radar-video integrated machine needs to collect vehicle trajectory data for technicians to verify and judge. It involves power-on wiring, data collection, analysis and verification by technicians, feedback re-adjusting, etc. The whole process is quite energy-consuming, the adjusting period is long, the installation process is troublesome, and the tacit understanding between the installer and the technicians is high, so it is difficult to quantitatively evaluate the installation effect and meet the requirements of installation efficiency and accuracy. It takes 15-20 minutes to adjust a single radar-video integrated machine, and the whole process takes about 2 hours, so the construction time is long. If the continuous sections are installed in a network, it will take even longer. It will take at least 5 days to complete the installation of a 10km long road, which has a great impact on road traffic.

Summary of the Invention

The purpose of the present invention is to overcome the problems in the prior art that it is difficult to adjust the radar-video integrated machine accurately, and the process consumes energy and time, and to provide an installation device of radar-video integrated machine for road and use method therefor, which can reduce the installation difficulty, quickly adjust and install, reduce the accurate installation time of a single radar-video integrated machine to within 2 minutes, save more than 85% of the time, and improve the installation accuracy of the radar-video integrated machine.

In order to achieve the above object, the present invention provides the following technical scheme.

An apparatus for installingaradar-video integrated machine for road includes a measurement apparatus installed on the radar-video integrated machine and a monitoring device located on the ground, wherein the measurement apparatus includes a first central controller and an angle collection sensor, a first status indicator lamp, a first wireless communication module and a first display module electrically connected with the first central controller; The monitoring device comprises a second central controller and a key module, a second status indicator lamp, a second wireless communication module and a second display module which are electrically connected with the second central controller; The mounting angle data of the rolling angle, yaw angle and pitch angle required for installing the radar-video integrated machine are input through the key module, the mounting angle data are sent to the first display module through the second wireless communication module and the first wireless communication module for display, adjust the rolling angle, yaw angle and pitch angle of the radar-video integrated machine, and collect the current angle data of the rolling angle, yaw angle and pitch angle of the radar-video integrated machine through an angle collection sensor, The current angle data is sent to the second display module for display through the first wireless communication module and the second wireless communication module, and the first central controller judges whether the current angle data is consistent with the mounting angle data. If they are consistent, the radar-video integrated machine is adjusted in place, and the first status indicator lamp is adjusted in place through the light emitting status indication, and the light emitting status signal is sent to the second status indicator lamp through the first wireless communication module and the second wireless communication module to synchronize the light emitting status.

An apparatus for installing a radar-video integrated machine for road uses the angle collection sensor for acquiring the rolling angle, yaw angle and pitch angle to quickly measure the three-axis attitude angle of the radar-video integrated machine and improve the installation accuracy of the radar-video integrated machine, wherein the rolling angle is the angle between the radar-video integrated machine itself and the horizontal plane, that is, the angle at which the radar-video integrated machine swings up and down relative to the horizontal plane, The yaw angle is the included angle between the symmetrical axis direction of the radar main beam and the geomagnetic north direction, and the pitch angle is the included angle between the symmetrical axis direction of the radar main beam and the downward direction perpendicular to the road surface. Through the first wireless communication module and the second wireless communication module, the current angle data, the current angle error value and the signal of the light emitting status of the first status indicator lamp are synchronized in real time, and displayed through the first display module and the second display module, so that the synchronization of related data and information is reduced to millisecond level, which greatly shortens the information transmission and interaction time between technicians on the ground and installers at the radar-video integrated machine. When the installers adjust the radar-video integrated machine, Because of the high requirement on the angle, the installer often needs to adjust repeatedly, and the requirement on the installer is high. When the installer rotates in a certain direction during adjusting, the information between the installer and the technician cannot be synchronized in time, which is prone to delay, and the angle is easily adjusted, so it is difficult to accurately align the radar-video integrated machine. Now, the installer can directly judge whether the rolling angle, yaw angle and pitch angle of the radar-video integrated machine for highway are adjusted in place through the adjusting state of the first status indicator lamp, which can give the installer a strong visual signal, saving the time for judging whether the angle is in place during installation, and the signal of the first status indicator lamp is intuitive and clear, thus reducing the installation difficulty of the radar-video integrated machine and making it easier for the installer to install it in place. The installer can quickly adjust the rolling angle, yaw angle and pitch angle of the radar-video integrated machine, and the technician can also know whether the installation is in place in real time through the second status indicator lamp, and then send out the next instruction, so that the whole adjusting time is reduced to 2 minutes, saving more than 85% of the time.

In a preferred embodiment of the present invention, the included angle between the plane where the angle collection sensor is located and the panel on the radar-video integrated machine facing the area to be tested is [80°, 100°], and the included angle between the plane where the angle collection sensor is located and the top panel of the radar-video integrated machine is [0°, 10°]; Through the setting of the angle collection sensor, the angle collection sensor matches the radar emission direction and video shooting direction of the laser-vision integrated machine, which is convenient for angle adjustment and measurement.

In a preferred embodiment of the present invention, the plane of the angle collection sensor is perpendicular to the panel facing the area to be tested on the radar-video integrated machine, and the plane of the angle collection sensor is parallel to the top panel of the radar-video integrated machine; Through the vertical and parallel setting relationship, the angle collection sensor is determined at an accurate angle, which improves the accuracy of angle data collection by the angle collection sensor.

In a preferred embodiment of the present invention, the reference direction of the rolling angle collected by the angle collection sensor is horizontal, the reference direction of the pitching angle is vertical to the road surface downward, the angular resolution of the pitching angle and the rolling angle collected by the angle collection sensor is $\geq 0.1°$, the reference direction of the yaw angle is geomagnetic north, and the angular resolution of the yaw angle collected by the angle collection sensor is $\geq 0.5°$; By setting the rolling angle, yaw angle and pitch angle, the adjustment direction is determined, and the angle accuracy is limited, so that the accuracy of the rolling angle, yaw angle and pitch angle is improved, and the mounting angle of the radar-video integrated machine is more accurate.

In a preferred embodiment of the present invention, the measurement apparatus has a casing, the side surface of which is provided with at least one suction disc for adsorption on the surface of the panel of the radar-video integrated machine, and the angle collection sensor is placed in the casing; The measurement apparatus is connected to the surface of the radar-video integrated machine by suction cup adsorption, so that the installation personnel can fix the measurement apparatus on the radar-video integrated machine accurately and quickly, which reduces the operation difficulty of the installation personnel, is convenient and quick to install, and can be directly unplugged after use, which is convenient for disassembly.

In a preferred embodiment of the present invention, the first status indicator lamp and the second status indicator lamp indicate whether the current angle data is consistent with the mounting angle data through at least two different light emitting staus, wherein the light emitting staus include on, off or flashing, and when the first status indicator lamp and the second status indicator lamp are on, they can emit light of at least one color; The first status indicator lamp and the second status indicator lamp indicate whether the rolling angle, yaw angle and pitch angle are in place, and the signals are clear, which is convenient for installers to judge whether the adjustment of each angle is in place when installing the radar-video integrated machine.

In a preferred embodiment of the present invention, the key module is also used to input mounting angle error values of rolling angle, yaw angle and pitch angle. The current angle error value between the current angle data and the mounting angle data of the corresponding angle is displayed by the first display module, and the second display module synchronously displays the current angle error value through the first wireless communication module and the second wireless communication module. If the current angle error value is less than the mounting angle error value, Then the first status indicator lamp is indicated by the light emitting staus, and if the current angle error value is more than or equal to the mounting angle error value, the first status indicator lamp is indicated by different light emitting staus or extinguishment; By comparing the current angle error value with the input mounting angle error value range, and using the first status indicator lamp to display, it can quickly judge whether the current angle data is in the angle error range, and guide the installer to install the radar-video integrated machine.

In a preferred embodiment of the present invention, the first status indicator lamp and the second status indicator lamp are both provided with at least three, which are respectively used to indicate whether the roll angle, yaw angle and pitch angle are adjusted in place; Three indicators can indicate three angles: rolling angle, yaw angle and pitch angle at the same time, which is convenient for synchronous adjusting of the three angles.

In a preferred embodiment of the present invention, the apparatus for installingaradar-video integrated machine for road further comprises a first watchdog module and a second watchdog module, wherein the first watchdog module is electrically connected to the first central controller and the second watchdog module is electrically connected to the second central controller, and the first watchdog module and the second watchdog module are respectively used for monitoring whether the measurement apparatus and the monitoring device are in normal working conditions; The first watchdog module monitors the measurement apparatus and the second watchdog module monitors the monitoring device, so that the measurement apparatus and the monitoring device can be ensured to work normally; If the measurement apparatus and the monitoring installation program are abnormal, the first watchdog module and the second watchdog module have no signal input, and the reset signal output by the first watchdog module or the second watchdog module is reset to the corresponding first central controller or the second central controller.

In a preferred embodiment of the present invention, the first display module and the second display module are digital display modules based on OLED, LCD, TFT or digital tube; The first display module and the second display module can choose different displays, and the current roll angle, yaw angle, pitch angle and angle error can be displayed through different displays.

The use method of the apparatus for installingaradar-video integrated machine for road, which uses apparatus for installingaradar-video integrated machine for road, comprises the following steps.

S1. According to the installation drawings of the radar-video integrated machine, determine the installation position of the radar-video integrated machine, the required mounting angle data: pitch angle, roll angle and yaw angle, and the mounting angle error value.

S2. Input the mounting angle data and the mounting angle error value through the keys on the key module of the monitoring device, and synchronize the signals with the mounting angle data and the mounting angle error value to the measurement apparatus.

S3. Move the measurement apparatus and the radar-video integrated machine to the position to be installed by lifting the car, and preliminarily fix the radar-video integrated machine in the installation position.

S4, the radar-video integrated machine and the measurement apparatus are kept still, the real-time rolling angle, yaw angle and pitch angle are obtained from the angle collection sensor through the first central controller and judged, and if the forward angle error values corresponding to the rolling angle, yaw angle and pitch angle are smaller than the mounting angle error values, the corresponding first status indicator lamp lights up; If the current angle error value is greater than or equal to the mounting angle error value, the corresponding first status indicator lamp changes the light emitting status or goes out.

S5. The first central controller sends the current angle data, the current angle error value and the light emitting status signal of the first status indicator lamp to the second wireless communication module through the first wireless communication module, and the second central controller obtains the data and signal through the second wireless communication module, sends the current angle data to the second display module for display, and sends the light emitting status signal to the synchronous light emitting status of the second status indicator lamp.

S6, according to the mounting angle data displayed by the first display module, adjust the pitch angle, roll angle and yaw angle of the radar-video integrated machine, and check the current angle data displayed by the first display module in real time until the radar-video integrated machine is installed in place; When the current roll angle, yaw angle and pitch angle, and the current angle error value all meet the requirements, all the first status indicator lamps light up and remain stable at the same time, which means that the current radar-video integrated machine is installed in place and the installation is over.

The sequence of step S2 and step S3 can be interchanged or synchronized.

Through the above steps, a single radar-video integrated machine can be quickly adjusted after being installed at the designed installation point, which reduces the adjusting difficulty and requirements for installers. Technicians can check the current angle data of the radar-video integrated machine on the ground and guide the installers to install the radar-video integrated machine, which is convenient for the installers to adjust the angles, and it is easier to adjust each angle accurately, with faster adjusting speed and higher adjusting accuracy.

In a preferred embodiment of the present invention, when adjusting the radar-video integrated machine in step S6, the pitch angle and yaw angle are adjusted so that the main beam direction of the radar-video integrated machine can cover the area of the road section to be monitored, and the rolling angle is $0°\pm0.5°$; The adjustment of pitch angle, yaw angle and roll angle is limited to ensure that the current angle data can always meet the installation requirements.

In the preferred embodiment of the present invention, in the above step S6, the adjustment of the radar-video integrated machine requires adjusting the rolling angle first, then the yaw angle, and finally the pitch angle until the corresponding first status indicator lights up; By setting the adjusting sequence, the radar-video integrated machine can be adjusted in the shortest time, which avoids the process of repeated adjusting and reduces the adjusting times and time. Through three successive adjustments, the position of radar-video integrated machine can be adjusted to the best position, which is convenient for adjusting all angles in place.

In the preferred embodiment of the present invention, in the above step S4, the first central controller works at a frequency above 1Hz to collect the current angle data of the angle collection sensor; The working frequency of the first central controller can be controlled in a certain range, which can be adjusted to an appropriate value to increase the output sensitivity and accuracy of the angle collection sensor.

In a preferred embodiment of the present invention, in the above step S6, each first status indicator lamp is on at the same time and kept stable for more than 2s; By adjusting the stability time of the first status indicator lamp, the time can be shortened, the time for networking installation of the radar-video integrated machine can be effectively reduced, and the installation efficiency can be improved.

The networking installation method of the apparatus for installingaradar-video integrated machine for road, and the using method of the apparatus for installingaradar-video integrated machine for road, comprises steps S1-S6, and further comprises:

S7. After installing the first radar-video integrated machine, lift the vehicle and move it to the next installation point. According to the installation angle data and the installation angle error value determined by the calculation of the installation drawings, the installation angle data and the installation angle error value are input through the monitoring device for installing the next radar-video integrated machine, and the radar-video integrated machine is installed in sequence according to steps S4-S6, and this step is repeated until the installation of all the radar-video integrated machine in the construction section is completed.

Through the installation personnel, a plurality of radar-video integrated machines are installed and fixed in sequence along the road, and completethe network installation of radar-video integrated machines, covering the entire road in the area to be monitored, so that the data of the vehicle collection area can be docked by the radar-video integrated machines, and the continuous measurement and collection of the vehicle status can be realized.

In the preferred embodiment of the present invention, in the above step S7,

When the road is a straight section, the methods for determining the rolling angle, yaw angle and pitch angle are as follows:

S71. The rolling angle of the installation is 0°, and the pitching angle of the installation is determined by the length of the road covered by the radar-video integrated machine and the installation height of the radar-video integrated machine, and the yaw angle of the installation is the included angle between the road and the geomagnetic north direction.

It can be applied to straight roads. When determining the adjusting angle of the radar-video integrated machine, the yaw angle can be obtained by directly measuring on the road surface, which is convenient and fast. The whole measuring process is simple, and the pitch angle can be obtained according to the value designed in advance by the ground measurement and installation height, which reduces the difficulty of obtaining various parameters, thus simplifying the adjusting process of the radar-video integrated machine and reducing the difficulty of installation and adjusting.

When the road is a curved section, the methods for determining the rolling angle, yaw angle and pitch angle are as follows:

S72. The installed rolling angle and pitching angle are the same as those in the case where the road is a straight section, and the yaw angle is determined by the included angle between the beam symmetry axis direction of the radar-video integrated machine and the geomagnetic north direction, wherein the beam direction of the radar-video integrated machine is the connecting line direction from the radar of the radar-video integrated machine to the center of the end of the highway in the area to be measured.

It can be applied to curved roads, which is more suitable for the problems encountered in actual construction. The angle determination in the actual installation and adjusting process is transformed into the installation model of adjacent radar-video integrated machines, which is convenient for technicians to quickly determine the installation angle data and determine the installation angle data of radar-video integrated machines. By combining two adjacent radar-video integrated machines, determine the angle and direction of adjacent radar-video integrated machines covering the road in the direction of continuous road, complete the docking of the acquisition areas of adjacent road sections on the road, ensure the continuous collection of the vehicle status of the whole road section to be tested, and improve the applicability of the radar-video integrated machines installed in different road sections.

Compared with the prior art, the invention has the beneficial effects that

1. Through the the apparatuses for installing the radar-video integrated machine for road, the technicians on the ground and the installers on the high places exchange data through the monitoring device and the measurement apparatus, and the installers directly determine whether the angle is adjusted in place by using the first status indicator lamp, which reduces the experience requirements for the installers, reduces the difficulty of accurate adjusting, and can realize rapid adjusting and installation of the radar-video integrated machine, and the adjusting time is reduced to 2 minutes, saving more than 85% of the time.

2. The rolling angle, yaw angle and pitch angle can be measured in real time through the angle collection sensor of the installation device of the radar-video integrated machine for road, which is convenient for the installer to know the current angle data of the radar-video integrated machine and improves the installation accuracy of the radar-video integrated machine.

3. Whether the rolling angle, the yaw angle and the pitch angle are adjusted in place can be directly determined through the first status indicator lamp and the second status indicator lamp of the the apparatuses for installing the radar-video integrated machine for road, which is convenient for the installation personnel to operate, accurately judges whether the radar-video integrated machine is adjusted in place, and improves the accuracy of operation.

4. Data can be exchanged in real time through the measurement apparatus and monitoring device of the the apparatuses for installing the radar-video integrated machine for road. The first wireless communication module and the second wireless communication module are convenient for data exchange and information synchronization, which can help technicians understand the mounting angle and save the interaction time between technicians and installers.

5. With the use method of the radar-video integrated machine for road, the installer can position and install the radar-video integrated machine for road, move it in place and fix it, and adjust the angle. With the instruction of the measurement apparatus, a single radar-video integrated machine can be installed at the installation point for rapid adjusting, which is convenient for technicians to obtain the current angle data adjusted by the installer in real time on the ground and guide the installer to install the radar-video integrated machine. Installers don't need enough level and experience, so it's easier to install. Installers can judge whether the adjustment angle is in place faster and adjust faster. The angle accuracy of the radar-video integrated machine is improved through angle collection sensors, and the adjusting sensitivity is improved through the judgment of current angle error and actual angle error, so the adjusting accuracy is higher.

6. Through the networking installation method of radar-video integrated machines for roads, a plurality of radar-video integrated machines are installed and adjusted in turn, and the networking installation of radar-video integrated machines for the whole section of roads in the area to be tested is completed, which can cover the roads in the whole area to be monitored, connect the data collected by two adjacent radar-video integrated machines, continuously collect the vehicle status, and realize the monitoring of vehicles on roads with long distance and mileage; When the road is a straight line, the yaw angle can be obtained by directly measuring on the road design drawing, which is convenient and fast, and the whole measurement process is simple, which simplifies the adjusting process of the radar-video integrated machine and reduces the difficulty of installation and adjusting. When the road is a curved section, it is more suitable for the problems encountered in the actual construction. The angle determination in the actual installation and adjusting process is transformed into the installation model of the adjacent radar-video integrated machine, which is convenient for technicians to quickly determine the mounting angle data, ensures the continuous collection of vehicle conditions in different road sections, and also improves the applicability of the radar-video integrated machine installed in different road sections.

Brief Description of the Drawings

Fig. 1 is a schematic diagram of the relationship between the apparatuses for installing the radar-video integrated machine for road.
Fig. 2 is a schematic diagram of the use of the apparatuses for installing the radar-video integrated machine for road.
Fig. 3 is a flow chart of the use of the apparatuses for installing the radar-video integrated machine for road.
Fig. 4 is a schematic diagram of the structures for installing the radar-video integrated machine according to Embodiment 1 of the present invention.
Fig. 5 is a schematic view of the mounting base of the radar-video integrated machine according to embodiment 1 of the present invention.
fig. 6 is a diagram showing the rolling angle, yaw angle and pitch angle of the radar-video integrated machine in the three-axis coordinate system according to the first embodiment of the present invention.
Intention.
Fig. 7 is a schematic diagram of the measurement apparatus of the apparatuses for installing the radar-video integrated machine for road in Embodiment 1 of the present invention.
Fig. 8 is a schematic diagram of the monitoring device of the apparatuses for installing the radar-video integrated machine for road in Embodiment 1 of the present invention.
Fig. 9 is a schematic diagram of the installation position of the measurement apparatus and the radar-video integrated machine according to Embodiment 2 of the present invention.
Fig. 10 is a schematic diagram of the installation position of the angle collection sensor and measurement apparatus according to Embodiment 2 of the present invention.
Fig. 11 is a schematic diagram of the relationship between the apparatuses for installing the radar-video integrated machine for road in Embodiment 3 of the present invention.
Fig. 12 is a schematic diagram of the measurement apparatus of the apparatuses for installing the radar-video integrated machine for road in Embodiment 3 of the present invention.
Fig. 13 is a schematic diagram of the monitoring device of the apparatuses for installing the radar-video integrated machine for road in Embodiment 3 of the present invention.
Fig. 14 is a schematic diagram of the use method of the apparatuses for installing the radar-video integrated machine for road in Embodiment 4 of the present invention.
Fig. 15 is a schematic diagram for adjusting the rolling angle of the radar-video integrated machine according to Embodiment 4 of the present invention.
Fig. 16 is a schematic plan view of the apparatuses for installing the radar-video integrated machine for road in Embodiment 4 of the present invention.
Fig. 17 is a schematic side view of the apparatuses for installingthe radar-video integrated machine for road in Embodiment 4 of the present invention.
Fig. 18 is a schematic side view of the radar-video integrated machinefor road in the fifth embodiment of the present invention.
Fig. 19 is a schematic plan view of the radar-video integrated machinefor road in the fifth embodiment of the present invention.

Illustration: 1- radar-video integrated machine; 11- radar beam; 12- axis of symmetry of main beam; 2- angle collection sensor, 3- measurement apparatus; 31- casing; 32- suction cup; 4- bottom support frame; 5- mounting base; 51- upper U-shaped member; 52- saddle-shaped connecting member; 53- lower U-shaped member.

Detailed Description

The present invention will be further described in detail with reference to experimental examples and specific embodiments. However, it should not be understood that the scope of the above-mentioned subject matter of the present invention is limited to the following embodiments, and all technologies realized based on the contents of the present invention belong to the scope of the present invention.

Embodiment 1

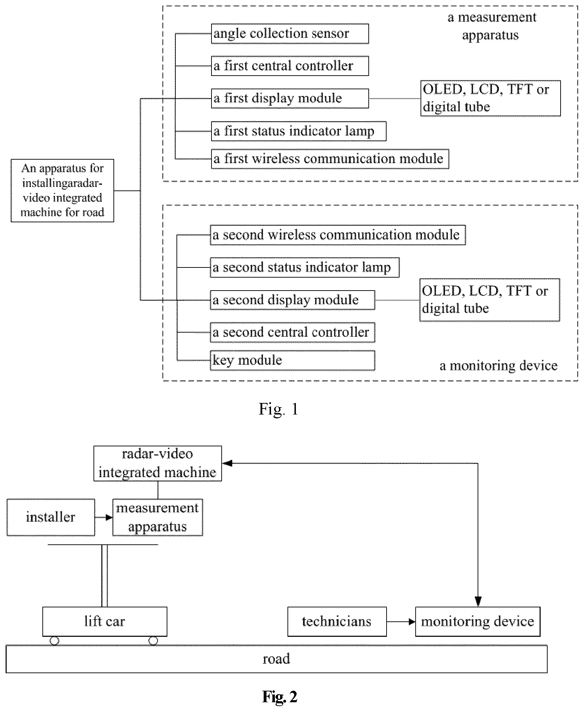

Please refer to Fig. 1 and Fig. 2. This embodiment provides an apparatus for installing a radar-video integrated machine for a road, which includes a measurement apparatus 3, which is installed on radar-video integrated machine 1 and a monitoring apparatus, which is located on the ground. The measurement apparatus 3 includes a first central controller, an angle collection sensor 2, a first status indicator lamp, a first wireless communication module and a first display module. The monitoring apparatus comprises a second central controller, a key module, a second status indicator lamp, a second wireless communication module and a second display module, wherein the angle collection sensor, the first status indicator lamp, the first wireless communication module and the first display module are respectively electrically connected to the first central controller, and the key module, the second status indicator lamp, the second wireless communication module and the second display module are respectively electrically connected to the second central controller. The first wireless communication module and the second wireless communication module are connected in communication, the measurement apparatus 3 measures the current angle data of the radar-video integrated machine 1, and the monitoring device receives the current angle data of the measurement apparatus 3 and the status of the first status indicator lamp and refreshes it; Technicians send the current adjusting angle data to the measurement apparatus 3 through the monitoring device, installers determine the mounting angle data through the measurement apparatus 3, and quickly adjust the radar-video integrated machine 1 according to the mounting angle data, and determine whether the roll angle, yaw angle and pitch angle are adjusted in place through the first status indicator lamp, so that the installers can quickly locate and adjust, the adjusting accuracy is obviously improved, and the adjusting time is obviously shortened.

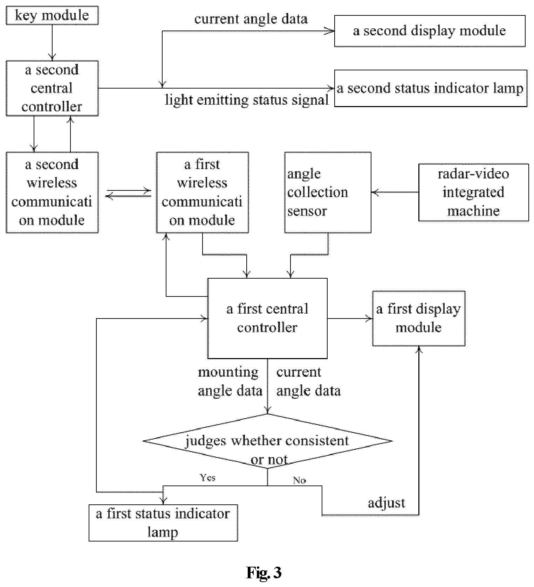

Please refer to Fig. 3. The use process of an apparatus for installing a radar-video integrated machine for a road is as follows: technicians input the mounting angle data of rolling angle, yaw angle and pitch angle required for installing the radar-video integrated machine 1 through the key module, and the mounting angle data is sent to the second central controller through the second wireless communication module and the first wireless communication module because the first wireless communication module is in communication connection with the second wireless communication module. The second central controller sends a display instruction to the first display module to display the mounting angle data, and then the installer adjusts the radar-video integrated machine 1, adjusting the rolling angle, yaw angle and pitch angle of the radar-video integrated machine 1, and collects the current angle data of the rolling angle, yaw angle and pitch angle of the radar-video integrated machine 1 through the angle collection sensor 2. The first central controller then sends the current angle data to the second central controller through the first wireless communication module and the second wireless communication module, and the second central controller sends a display instruction to the second display module to display the current angle data on the second display module, and the first central controller determines whether the current angle data is consistent with the mounting angle data, and when they are consistent, the radar-video integrated machine 1 is adjusted in place. The first status indicator lamp indicates whether adjusting is in place through different light-emitting status, the first central controller sends the light-emitting status signal to the second central controller through the first wireless communication module and the second wireless communication module, and the second central controller sends a light-emitting instruction to the second status indicator lamp to synchronize the light-emitting status of the second status indicator lamp with the first status indicator lamp.

The angle collection sensor 2 of this embodiment requires at least three-axis magnetometer and three-axis accelerometer sensors, and in order to be more accurate, the calculation process can also be assisted by the accelerometer to improve the accuracy. This embodiment adopts a 9-axis attitude angle sensor (WT931 model manufactured by Shenzhen Weite Intelligent Technology Co., Ltd.), with a working voltage of 3.3V and a data output rate of 500Hz at the highest. The output rate is adjustable from 0.1~500Hz to 500 Hz. The attitude angle sensor integrates a high-precision gyroscope, an accelerometer and a geomagnetic field sensor, and can quickly solve the current real-time motion attitude of the angle collection sensor 2 by using a high-performance microprocessor and advanced dynamic solution and Kalman dynamic filtering algorithm. The angle collection sensor 2 cooperates with the dynamic Kalman filtering algorithm to accurately output the current attitude of the radar-video integrated machine 1 in a dynamic environment, and the attitude measurement accuracy is static 0.05 and dynamic 0.1. The angle collection sensor 2 is in a sheet shape, and the angle collection sensor 2 is embedded in a PCB board, which is installed on the radar-video integrated machine 1, or the PCB board can be installed in the radar-video integrated machine 1, that is, the measurement apparatus 3 is placed in the radar-video integrated machine 1.

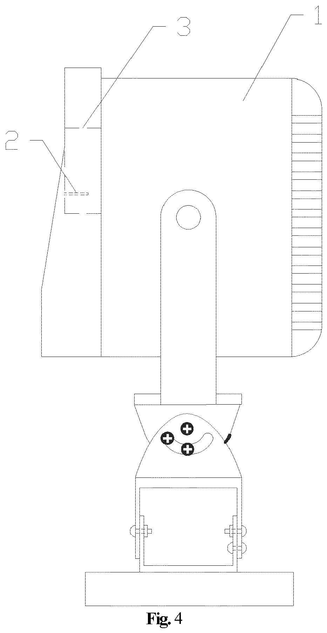

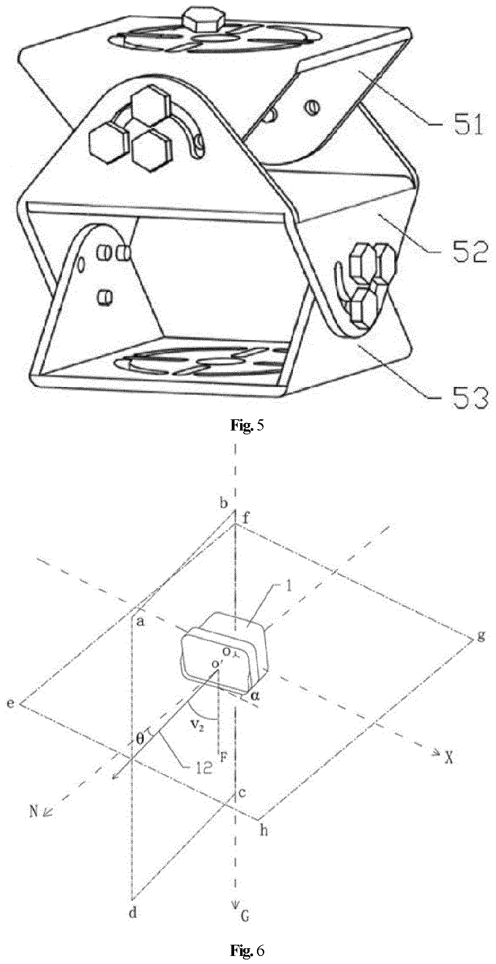

Please refer to Fig. 4 and Fig. 5. In this embodiment, the panel facing the area to be tested on the radar-video integrated machine 1 is the front panel, the measurement apparatus 3 is fixedly installed on the front panel of the radar-video integrated machine 1 by screws, the angle collection sensor 2 is connected to the PCB board, and the PCB board is built in the measurement apparatus 3 and fixed by screws for installing various components, and the PCB board is provided with an insertion opening for connecting the angle collection sensor 2. After the angle collection sensor 2 is inserted and connected to the PCB board, the angles between the angle collection sensor 2 and the front panel and the top panel of the radar-video integrated machine 1 are determined, which can be in the range of $\pm 10°$ in practice. Preferably, the plane where the angle collection sensor 2 is located is vertical or basically vertical to the panel of the radar-video integrated machine facing the area to be measured, and the plane where the angle collection sensor is located is parallel or basically parallel to the top panel of the radar-video integrated machine 1. It should be noted that basically vertical refers to an angle close to 90°. In practice, the angle collection sensor 2 can also be installed in an integrated way, so that the angle collection sensor 2 matches the radar emission direction and video shooting direction of the radar-video integrated machine 1, which is convenient for angle adjustment and measurement; In this embodiment, the included angle between the angle collection sensor 2 and the front panel of the radar-video integrated machine 1 is 80°, that is, the angle collection sensor 2 inclines slightly upwards or slightly downwards at an angle of 100°, and the plane where the angle collection sensor 2 is located forms an included angle of 10° with the top panel of the radar-video integrated machine 1; The radar-video integrated machine 1 is installed on the bottom support frame 4, the two ends of the bottom support frame 4 are bent upwards, and the ends are connected to the side of the radar-video integrated machine 1, which is hinged and fixed by a pin shaft. A flange is arranged in the center of the bottom of the bottom support frame 4, which is rotatably connected with the mounting base 5, which comprises an upper U-shaped member 51, a saddle-shaped connecting member 52 and a lower U-shaped member 53, and the upper U-shaped member 51 is connected with the saddle-shaped connecting member 52 by grooves. The lower U-shaped member 53 is connected with the saddle-shaped connecting member 52 by bolts, and the two sides of the lower U-shaped member 53 are provided with first arc-shaped through grooves, and the rotation angle of the first arc-shaped through grooves is fixed by screws, and the adjusted position is fixed by tightening the screws after the adjustment rolling angle is determined; The adjustment of the yaw angle is determined by the flange, the bottom support frame 4 rotates relative to the upper U-shaped member 51, and the top of the upper U-shaped member 51 is provided with a second arc-shaped through groove, and the second arc-shaped through groove fixes the rotation angle through a screw, and after the adjustment of the yaw angle is determined, the adjusted position is fixed by tightening the screw; Both sides of the saddle-shaped connecting member 52 are provided with a third arc-shaped through groove, and the pitch angle is fixed by a screw. After the pitch angle is determined, the adjusted pitch position is fixed by tightening the screw.

Referring to Fig. 6, establish a three-axis coordinate system with the center of the radar-video integrated machine as the coordinate origin O, establish one axis with the geomagnetic north direction N as the reference, establish the other axis in the other direction X perpendicular to the N direction on the horizontal plane, and the downward direction G perpendicular to the road is the third axis, and then the plane abcd and the plane efgh are established. When the radar-video integrated machine adjusts the pitch angle, The plane where the sweeping direction of the radar main beam symmetry axis 12 is located is plane abcd, and the plane efgh is the horizontal plane at the bottom of the radar-video integrated machine 1, which is below the plane NOX, wherein there is an included angle $\alpha$ between the bottom of the radar-video integrated machine 1 and the plane efgh, and an included angle $\theta$ between the plane abcd and the plane NOG, which is the included angle between the direction of the main beam symmetry axis 12 of the radar-video integrated machine 1 and the geomagnetic north direction N, Taking the radar position of the radar-video integrated machine 1 as O' point, the O'F direction perpendicular to the road surface downward is established, O'F is parallel to OG, and there is an included angle $V_2$ between the symmetry axis of the radar main beam 12 and O'F; The angle collection sensor 2 is used to acquire the current angle data of the radar-video integrated machine 1, including three current angle data: rolling angle, yaw angle and pitch angle. The rolling angle is the angle between the radar-video integrated machine 1 itself and the horizontal plane, that is, the angle at which the radar-video integrated machine 1 swings up and down relative to the horizontal plane. When swinging, the front of the radar-video integrated machine 1 faces the area to be measured on the road, and its left and right sides swing up and down at a small angle, which is $\alpha$, The yaw angle is the angle between the working direction of the radar-video integrated machine 1 and the geomagnetic north direction, that is, the angle between the symmetrical axis 12 of the radar main beam of the radar-video integrated machine 1 and the geomagnetic north direction, which is $\theta$; the pitch angle is the angle between the working direction of the radar-video integrated machine 1 and the downward direction perpendicular to the road surface, that is, the included angle between the symmetrical axis 12 of the radar main beam of the radar-video integrated machine 1 and the downward direction perpendicular to the road surface, which is $V_2$, where the reference direction of the rolling angle is the horizontal direction and the reference of the yaw angle.

If the road is horizontally arranged and the road surface is parallel to the horizontal plane, when the angle collection sensor 2 of this embodiment returns to zero, the initial state is: the pitch angle is 10° and the rolling angle is 0°, while the pitch angle and rolling angle of the radar-video integrated machine 1 are 0° and the allowable error of the rolling angle is 0.5°, and the pitch angle reading of the radar-video integrated machine 1 is subtracted by 10°. The initial yaw angle is the included angle between the road extension direction and the geomagnetic north direction, which makes the radar emission and video shooting direction of the radar-video integrated machine 1 almost the same as the road extension direction. The reference direction of the yaw angle is the geomagnetic north direction, and the angular resolution of the pitch angle and the roll angle are both $\geq 0.1°$, and the angular resolution of the yaw angle is $\geq 0.5°$.

If the road has an inclination, there are two situations: one is that the road has an inclination along the left and right directions, which does not affect the installation of the radar-video integrated machine 1, and the other is that the road has an inclination along its extension direction, which can be obtained from the road surface parameters or measured, and the pitch angle of the radar-video integrated machine 1 is calculated by adding/subtracting the inclination angle of the road based on the fact that the road is horizontal. By setting the roll angle, yaw angle and pitch angle, determine the adjustment direction. The pitch angle and roll angle are adjusted in the vertical plane, and the yaw angle is adjusted in the horizontal plane. The angle collection sensor 2 is used to measure, and the angle error is limited in a small range, so the angle accuracy is high, which improves the measurement accuracy of the roll angle, yaw angle and pitch angle, and the installer can adjust the angle more accurately when installing the radar-video integrated machine 1.

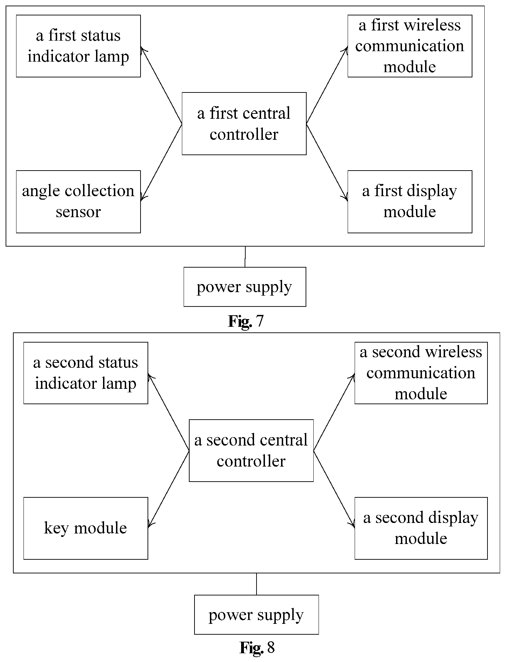

Please refer to Fig. 7 and Fig. 8. The measurement apparatus 3 of this embodiment is controlled by a first central controller. The first central controller, the angle collection sensor 2, the first status indicator lamp, the first wireless communication module and the first display module are respectively integrated on the same PCB board. The first wireless communication module is the existing Lora wireless module, and the angle collection sensor 2, the first status indicator lamp, the first wireless communication module and the first display module are respectively the same as the first one. In the monitoring device of this embodiment, the components are controlled by the second central controller, and the second central controller, the key module, the second status indicator lamp, the second wireless communication module and the second display module are integrated on the same PCB respectively. The second wireless communication module is an existing Lora wireless module, and the key module, the second status indicator lamp, the second wireless communication module and the second display module are electrically connected with the second central controller respectively, and the PCB board is connected with a power supply by connecting a rechargeable battery; In this embodiment, both the first central controller and the second central controller adopt single chip microcomputer, and the first status indicator lamp and the second status indicator lamp adopt LED lamps, and there are four of them, three of which respectively indicate whether the rolling angle, pitch angle and yaw angle are adjusted in place, while the fourth first status indicator lamp and the fourth second status indicator lamp are respectively used to indicate whether the three angles are adjusted in place at the same time. The first wireless communication module and the second wireless communication module adopt Lora wireless module, and can also adopt wireless Wi-Fi module, 4G wireless module, 5G wireless module or Bluetooth module to remotely guide adjusting and installation. The first display module and the second display module are OLED displays.

The key module is a matrix key module with digital keys and data entry in the prior art. The digital keys are used for technicians to input the calculated mounting angle data into the monitoring device. The mounting angle data includes the angle values and mounting angle error values of the rolling angle, yaw angle and pitch angle that meet the installation requirements, and the mounting angle data required for installing the radar-video integrated machine 1 is entered through the key module. The current angle error value between the current angle data and the corresponding mounting angle data is displayed on the first display module. If the current angle error value is within the mounting angle error value range, that is, the current angle error value is less than the mounting angle error value, the first status indicator lamp lights up and emits red light when it lights up. If the current angle error value exceeds the mounting angle error value range, that is, the current angle error value is greater than or equal to the mounting angle error value, the first status indicator lamp goes out. The second status indicator lamp synchronizes the light emitting status of the first status indicator lamp through the first wireless communication module and the second wireless communication module, and the second central controller keeps the light emitting status of the second status indicator lamp consistent with the first status indicator lamp after receiving the status of the first status indicator lamp.

The first display module and the second display module are used to display the current angle data and the current angle error value of the radar-video integrated machine 1, both of which are OLED displays. The measurement apparatus displays the current angle data collected by the angle collection sensor 2 through its own OLED display, and the monitoring device displays the mounting angle data input through the key module through its own OLED display. After that, the installer adjusts the radar-video integrated machine 1, and the second display module displays the current angle data collected by the angle collection sensor 2. The second display module and the first display module synchronize signals through the first wireless communication module and the second wireless communication module, so that the data displayed by the first display module is consistent with the current angle data displayed by the second display module. The first display module and the first wireless communication module are respectively electrically connected with the first central controller, and the second display module and the second wireless communication module are respectively electrically connected with the second central controller. In this way, the information synchronization with data between the first display module and the second display module is realized through the first wireless communication module and the second wireless communication module, which receives the signal with the mounting angle data through the first wireless communication module, and the first wireless communication module synchronously transmits the current angle data, the current angle error value and the signal of the first status indicator lamp collected by the angle collection sensor 2 to the second wireless communication module. The first display module displays the mounting angle data received through the first wireless communication module and the current angle data collected by the angle collection sensor 2, while the second display module displays the current angle data and the current angle error value after receiving the data through the second wireless communication module, and at the same time, after receiving the first status indicator signal, the second central controller sends a signal to the second status indicator lamp to synchronize the light emitting status of the first status indicator lamp; When an installer adjusts the radar-video integrated machine 1, the first central controller determines whether the current angle data meets the requirements, and prompts the installer whether to adjust the radar-video integrated machine 1 accurately through the first status indicator lamp. The first status indicator lamp and the second status indicator lamp have adjusting status indicating whether they meet the requirements, and the adjusting status is luminous. When they meet the requirements, the adjusting status is that the first status indicator lamp and the second status indicator lamp on and emit red light when the status is on.

In this embodiment, there are four first status indicator lamps and four second status indicator lamps, which are electrically connected to the first central controller, and three first status indicator lamps and three second status indicator lamps respectively indicate the adjusting status of the roll angle, yaw angle and pitch angle. When the roll angle is adjusted, Then the first status indicator lamp and second status indicator lamp corresponding to the rolling angle light up; when the yaw angle is adjusted in place, the first status indicator lamp and the second status indicator lamp corresponding to the pitch angle light up; when the pitch angle is adjusted in place, the fourth first status indicator lamp and the second status indicator lamp light up, indicating that the three angles are installed in place; Three indicator lamps can indicate three angles: rolling angle, yaw angle and pitch angle at the same time, which is convenient for the three angles to be adjusted in place successively; When the measurement apparatus 3 and the monitoring device are used for installation, the three-axis state of the radar-video integrated machine 1 can be quickly determined by determining the rolling angle, the yaw angle and the pitch angle; the installer can quickly determine whether to adjust the corresponding angle in place through the indication of the first status indicator lamp; the technician can know the installation situation of the installer through the indication of the second status indicator lamp, which reduces the adjusting and installation time and realizes the rapid positioning and installation of the radar-video integrated machine 1.

Embodiment 2

This embodiment is basically the same as Embodiment 1, but the difference lies in the arrangement of the measurement apparatus 3.

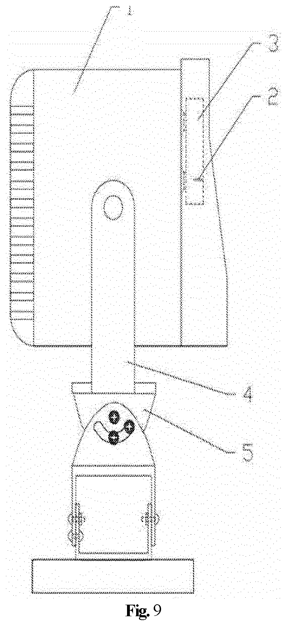

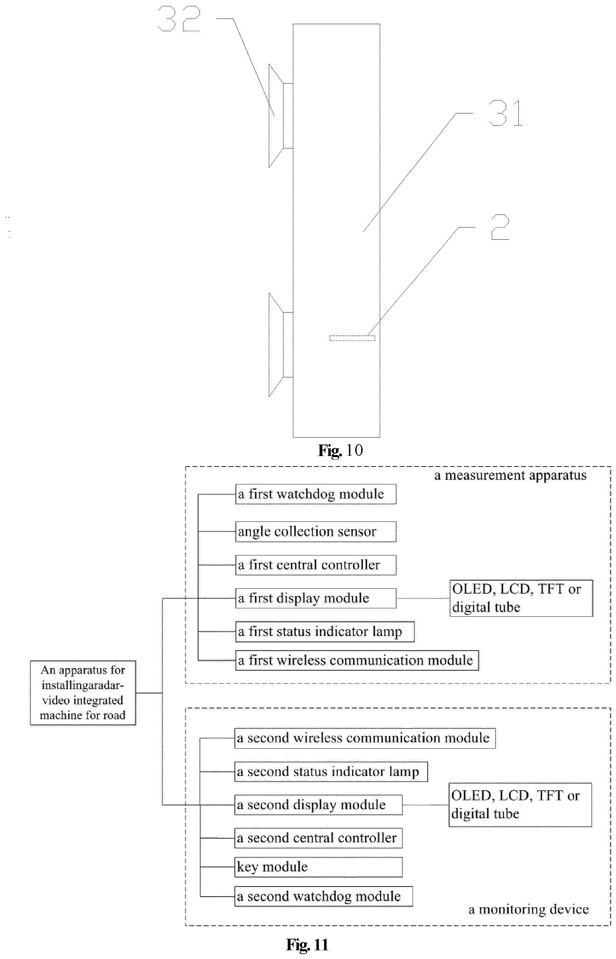

Please refer to Fig. 9 and Fig. 10. The measurement apparatus 3 has a casing 31, which is cuboid as a whole. At least one suction cup 32 is attached to the side of the casing 31. In this embodiment, two suction cups 32 are used in an up-and-down distribution. The suction cups 32 are used to be adsorbed on the surface of the panel of the radar-video integrated machine 1, and the angle collection sensor 2 is placed in the casing 31. In this embodiment, the PCB board is fixed in the measurement apparatus 3 by screws. The measurement apparatus 3 is connected to the surface of the radar-video integrated machine 1 by the suction cup 32, so that the installer can fix the measurement apparatus 3 on the radar-video integrated machine 1 accurately and quickly, which reduces the operation difficulty of the installer, and is convenient and quick to install. After use, the measurement apparatus 3 can be directly unplugged, which is convenient for disassembly.

Embodiment 3

This embodiment is basically the same as Embodiment 1, but the difference lies in the arrangement of the measurement apparatus 3 and the monitoring device, wherein the measurement apparatus 3 and the monitoring device respectively have a watchdog module, a charging module and a power supply module, the number of the first status indicator lamps and the second status indicator lamps are different, and the mounting angles of the angle collection sensor 2 are also different, and so on.

Please refer to Fig. 11. This embodiment provides an installation device of radar-video integrated machine for road, which includes a measurement apparatus 3 installed on radar-video integrated machine 1 and a monitoring device located on the ground. The measurement apparatus 3 is convenient for installers to determine the angle of radar-video integrated machine 1 and adjust it, and the monitoring device is convenient for technicians to guide and supervise the installers to install radar-video integrated machine 1 in place. The measurement apparatus 3 includes a first central controller, an angle collection sensor 2, a first status indicator lamp, a first wireless communication module, a first display module, a first watchdog module, a first charging module, a first battery and a first step-down module. The monitoring device includes a second central controller, a key module, a second status indicator lamp, a second wireless communication module, a second display module, a second watchdog module, a second charging module, a second battery and a second step-down module. The current angle data of the radar-video integrated machine 1 is measured by the measurement apparatus 3, and the monitoring device receives the current angle data of the measurement apparatus 3 and the status of the first status indicator lamp and refreshes it; Technicians send the mounting angle data to the measurement apparatus 3 through the monitoring device, installers determine the mounting angle data through the measurement apparatus 3, and quickly adjust the radar-video integrated machine 1 according to the mounting angle data, and determine whether the rolling angle, yaw angle and pitch angle are adjusted in place through the first status indicator lamp, so that the installers can quickly locate and adjust, and the adjusting accuracy is obviously improved and the adjusting time is obviously shortened.

The angle collection sensor 2 of this embodiment uses a 6-axis attitude angle sensor, a 3-axis accelerometer and a 3-axis magnetometer to measure the angle and geomagnetic direction of the radar-video integrated machine, with a working voltage of 3.3V, the highest data output rate of 550Hz, and an adjustable output rate of 0.1-550 Hz. The attitude angle sensor integrates a high-precision accelerometer and a geomagnetic sensor. Since most of the six-axis attitude angle sensors in the market are gyroscopes and accelerometers, the 9-axis attitude angle sensor is needed to implement the invention. In this embodiment, the current real-time motion attitude of the angle collection sensor 2 can be quickly solved by using a high-performance microprocessor and advanced dynamic calculation and Kalman dynamic filtering algorithm. The angle collection sensor 2 cooperates with the dynamic Kalman filtering algorithm to accurately output the current attitude of the radar-video integrated machine 1 in a dynamic environment, and the attitude measurement accuracy is static 0.05° and dynamic 0.1°, and the stability is extremely high. The angle collection sensor 2 is sheet-shaped, embedded in a PCB board, which is installed on the radar-video integrated machine 1. The panel facing the area to be tested on the radar-video integrated machine 1 is the front panel, and the included angle between the angle collection sensor 2 and the front panel of the radar-video integrated machine 1 is 90°, that is, the angle collection sensor 2 is perpendicular to the front panel of the radar-video integrated machine 1, and the plane where the angle collection sensor 2 is located forms an included angle of 0° with the top panel of the radar-video integrated machine 1, that is, the angle collection sensor 2 is parallel to the front panel of the radar-video integrated machine 1. Wherein, the PCB board is built in the measurement apparatus 3 for installing various parts. The PCB board is fixed in parallel to the front panel of the radar-video integrated machine 1 and fixed by screws. The PCB board is provided with a plugin port for connecting the angle collection sensor 2, which is inserted and vertically connected to the PCB board. The vertical or parallel relationship between the angle collection sensor 2 and the front panel and the top panel of the radar-video integrated machine 1 is determined, so that the angle collection sensor 2 matches the radar emission direction and video shooting direction of the radar-video integrated machine 1, which is convenient for the angle.

As in Embodiment 1, a three-axis coordinate system is established with the center of the radar-video integrated machine as the coordinate origin O, and determine the rolling angle $\alpha$, yaw angle $\theta$ and pitch angle $V_2$. The angle collection sensor 2 is used to collect the current angle data of the radar-video integrated machine 1, including three current angle data: rolling angle, yaw angle and pitch angle. The rolling angle is the angle between the radar-video integrated machine 1 itself and the horizontal plane. That is, the angle at which the radar-video integrated machine 1 swings up and down relative to the horizontal plane. When swinging, the front of the radar-video integrated machine 1 faces the area to be measured on the road, and its left and right sides swing up and down at a small angle, which is a, and the yaw angle is the angle at which the working direction of the radar-video integrated machine 1 deviates from the geomagnetic north direction, which is the angle between the direction of the symmetry axis 12 of the radar main beam of the radar-video integrated machine 1 and the geomagnetic north direction, which is 0. The pitch angle is the included angle between the working direction of the radar-video integrated machine 1 and the downward direction perpendicular to the road surface, that is, the included angle between the symmetrical axis 12 of the radar main beam of the radar-video integrated machine 1 and the downward direction perpendicular to the road surface, which is $V_2$, wherein the reference direction of the rolling angle is horizontal, the reference direction of the yaw angle is geomagnetic north, and the reference direction of the pitch angle is downward perpendicular to the road surface; By default, the road is set horizontally, and the road surface is parallel to the horizontal plane. When the angle collection sensor 2 in this embodiment returns to zero, the initial status is: the pitch angle is 0° and the rolling angle is 0°, while the pitch angle and rolling angle of the radar-video integrated machine 1 are 0°, the allowable error of the rolling angle is 0.5°, and the initial yaw angle is the included angle between the road extension direction and the geomagnetic north direction. The included angle makes the radar emission and video shooting direction of the radar-video integrated machine 1 almost the same as the road extension direction, the reference direction of the yaw angle is the geomagnetic north direction, the angular resolution of the pitch angle and the roll angle are both $\geq 0.1°$, and the angular resolution of the yaw angle is $\geq 0.5°$; If the road has an inclination, there are two situations: one is that the road has an inclination along the left and right directions, which does not affect the installation of the radar-video integrated machine 1; the other is that the road has an inclination along its extension direction, which can be obtained from the road surface parameters or measured, and the pitch angle of the radar-video integrated machine 1 is calculated as follows: the pitch angle required for installing the radar-video integrated machine 1 is obtained by adding the inclination angle of the road; By setting the roll angle, yaw angle and pitch angle, the adjustment direction is determined. The pitch angle and roll angle are adjusted in the vertical plane, and the yaw angle is adjusted in the horizontal plane. The angle collection sensor 2 is used to measure, and the angle error is limited in a small range, so the angle accuracy is high, which improves the measurement accuracy of the roll angle, yaw angle and pitch angle, and the installer can adjust the angle more accurately when installing the radar-video integrated machine 1.

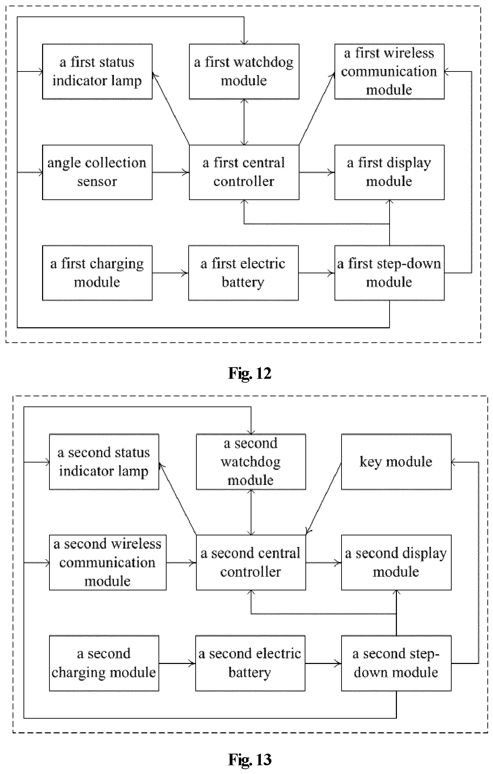

Please refer to Fig. 12 and Fig. 13. The measurement apparatus 3 of this embodiment is controlled by the first central controller. The first central controller, the angle collection sensor 2, the first status indicator lamp, the first wireless communication module, the first display module, the first watchdog module, the first charging module, the first battery and the first step-down module are respectively integrated in the same PCB board. The PCB board is connected with a power supply by connecting a first step-down module, and the first charging module and the first step-down module are respectively electrically connected with a first electric battery for charging and providing power supply, wherein the angle collection sensor 2, the first status indicator lamp, the first wireless communication module, the first display module, the first watchdog module, the first charging module and the first step-down module are respectively electrically connected with a first central controller; In the monitoring device of this embodiment, the components are regulated by the second central controller, and the second central controller, the key module, the second status indicator lamp, the second wireless communication module, the second display module, the second watchdog module, the second charging module, the second battery and the second step-down module are respectively integrated on the same PCB board, and the PCB board is connected with the second step-down module, The second charging module and the second step-down module are respectively electrically connected with the second battery for charging and providing power, wherein the key module, the second status indicator lamp, the second wireless communication module, the second display module, the second watchdog module, the second charging module and the second step-down module are respectively electrically connected with the second central controller; In this embodiment, both the first central controller and the second central controller adopt DSP processors, the first status indicator lamp and the second status indicator lamp adopt LED lamps, and there are three of them, which respectively indicate whether the rolling angle, pitch angle and yaw angle are adjusted in place. The first wireless communication module and the second wireless communication module adopt 4G wireless module or 5G wireless module, and also can adopt wireless Wi-Fi module or Bluetooth module. The first display module and the second display module are both LCD displays, and TFT or digital tube can also be used. In this embodiment, the first status indicator lamp and the second status indicator lamp are LED lamps, and other lights that can emit light can also be used.

The key module is a touch key module with touch digital keys in the prior art. The touch digital keys are used for technicians to input the calculated mounting angle data into the monitoring device. The mounting angle data includes the angle values and mounting angle error values of the rolling angle, yaw angle and pitch angle that meet the installation requirements, and the mounting angle data required for installing the radar-video integrated machine 1 is input through the touch key module. The current angle error value between the current angle data and the corresponding mounting angle data is displayed in the first display module. If the current angle error value is within the mounting angle error value range, that is, the current angle error value is less than the mounting angle error value, the first status indicator lamp is on, and when it is on, it emits yellow light, or it can emit light of other colors. If the current angle error value exceeds the mounting angle error value range, that is, the current angle error value is greater than or equal to the mounting angle error value, Then the first status indicator lamp changes its light emitting status and lights up red, while the second status indicator lamp synchronizes the light emitting status of the first status indicator lamp through the first wireless communication module and the second wireless communication module, and the second central controller keeps the light emitting status of the second status indicator lamp consistent with the first status indicator lamp after receiving the status of the first status indicator lamp.

This embodiment adopts the circuit monitoring method to ensure the normal operation of the monitoring device and the measurement apparatus 3. The first watchdog module and the second watchdog module are both existing watchdog circuit modules for monitoring, and the TPS3828 processor monitoring circuit module, which is essentially a timer circuit module, regularly checks the internal conditions of the first central controller and the second central controller. Once an error occurs, The first watchdog module sends a restart signal to the first central controller, and the second watchdog module sends a restart signal to the second central controller. The first watchdog module is used to monitor whether the measurement apparatus 3 is in a normal working state, and the first watchdog module is electrically connected to the first central controller, and the second watchdog module is electrically connected to the second central controller. The first watchdog module monitors the measurement apparatus 3, and the second watchdog module monitors the monitoring device, so that the measurement apparatus 3 and the monitoring device can be ensured to work normally; If the programs of the measurement apparatus 3 and the monitoring device are abnormal, the first watchdog module and the second watchdog module have no signal input, and the reset signal output by the first watchdog module or the second watchdog module is reset to the corresponding first central controller or second central controller, and then the measurement apparatus 3 and the monitoring device are restarted and reset.

The first battery in this embodiment is a rechargeable battery, and the first charging module and the first step-down module are electrically connected to the first battery, respectively. The first charging module is a module for providing charging regulation and control, and the first step-down module is a module for reducing the voltage to the working range, all of which are in the prior art. The first charging module supplies power to the first central controller, the angle collection sensor 2, the first status indicator lamp, the first wireless communication module, the first display module and the first watchdog module respectively. The first battery is charged by the first charging module, and the first battery supplies power to the measurement apparatus 3 by the first step-down module, and the first step-down module reduces the voltage of the battery to the application range; In this embodiment, the second battery is a rechargeable battery, the second charging module is a module for providing charging control, and the second step-down module is a module for reducing the voltage to the working range, all of which are in the prior art. The second charging module and the second step-down module are electrically connected to the second battery, and the second charging module supplies power to the second central controller, the key module, the second status indicator lamp, the second wireless communication module, the second display module and the second watchdog module respectively. The second battery is charged by the second charging module, and the second battery supplies power to the measurement apparatus 3 by the second step-down module, and the second step-down module reduces the voltage of the battery to the use range.

The first display module and the second display module are used to display the current angle data of the radar-video integrated machine 1, both of which are LCD displays. The measurement apparatus displays the current angle data collected by the angle collection sensor 2 through its own LCD display angle, and the monitoring device displays the mounting angle data input through the key module through its own LCD display, after which the installer adjusts the radar-video integrated machine 1. The second display module displays the current angle data acquired by the angle collection sensor 2, and the second display module and the first display module synchronize signals through the first wireless communication module and the second wireless communication module, so that the data displayed by the first display module is consistent with the current angle data displayed by the second display module; The signal synchronization with data between the first display module and the second display module is realized by the first wireless communication module and the second wireless communication module, which receives the signal with mounting angle data through the first wireless communication module, and synchronously transmits the current angle data, the current angle error value and the signal of the first status indicator lamp collected by the angle collection sensor 2 to the second wireless communication module. The first display module displays the mounting angle data received by the first wireless communication module, and the second display module displays the current angle data and the current angle error value after receiving the data through the second wireless communication module. At the same time, after receiving the first status indicator signal, the second central controller sends a signal to the second status indicator to synchronize the lighting emitting status of the first status indicator. When the installer adjusts the radar-video integrated machine 1, The first central controller determines whether the current angle data meets the requirements, and prompts the installer whether to adjust the radar-video integrated machine 1 accurately through the first status indicator lamp. The first status indicator lamp and the second status indicator lamp have adjusting status indicating whether they meet the requirements, and the adjusting status is luminous. The lighting status includes: on and off, changing flashing status or changing the lit color. In this embodiment, when the requirements are met, the adjusting status is that the first status indicator lamp or the second status indicator lamp lights up and emits yellow light.

In this embodiment, there are three first status indicators and three second status indicators, which are electrically connected to the first central controller and the second central controller, respectively indicating the adjusting states of the rolling angle, yaw angle and pitch angle. When the rolling angle is adjusted, the first status indicator and the second status indicator corresponding to the rolling angle are lit. When the yaw angle is adjusted in place, the first status indicator lamp and the second status indicator lamp corresponding to the yaw angle light up, and when the pitch angle is adjusted in place, the first status indicator lamp and the second status indicator lamp corresponding to the pitch angle light up; Three indicator lamps can indicate three angles: rolling angle, yaw angle and pitch angle at the same time, which is convenient for the three angles to be adjusted in place successively; When the measurement apparatus 3 and the monitoring device are installed, the three-axis state of the radar-video integrated machine 1 can be quickly determined by determining the rolling angle, the yaw angle and the pitch angle; the installer can quickly determine whether the corresponding angle is adjusted in place through the indication of the first status indicator lamp; the technician can know the installation situation of the installer through the indication of the second status indicator lamp, and determine whether the adjustment of each angle is in place, thus reducing the adjusting and installation time and realizing the rapid positioning and installation of the radar-video integrated machine 1.

Embodiment 4

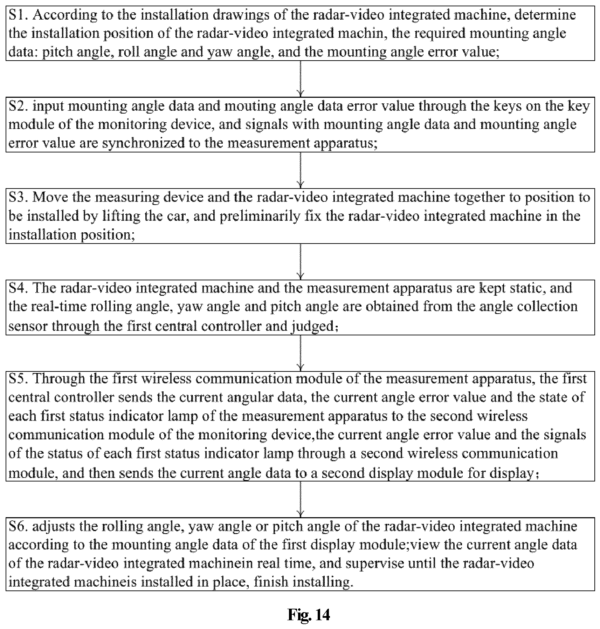

Please refer to Fig. 14. This embodiment adopts the apparatus for installing a radar-video integrated machine for a road in Embodiment 3. The difference between this embodiment and the practical embodiment 3 is that this embodiment also includes the use method of the installation device for the radar-video integrated machine for a road, which is aimed at the installation device for the radar-video integrated machine for a road in Embodiment 3, and the use method includes the following steps:

S1. According to the installation drawings of the radar-video integrated machine 1, technicians determine the installation position of the radar-video integrated machine 1, the required mounting angle data: pitch angle, roll angle and yaw angle, and the mounting angle error value.

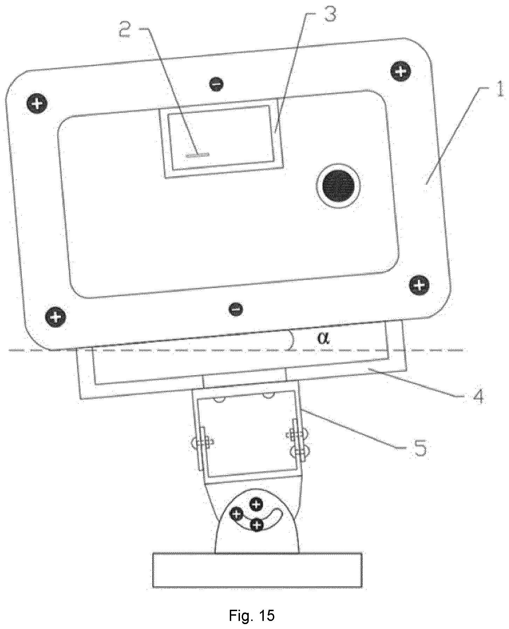

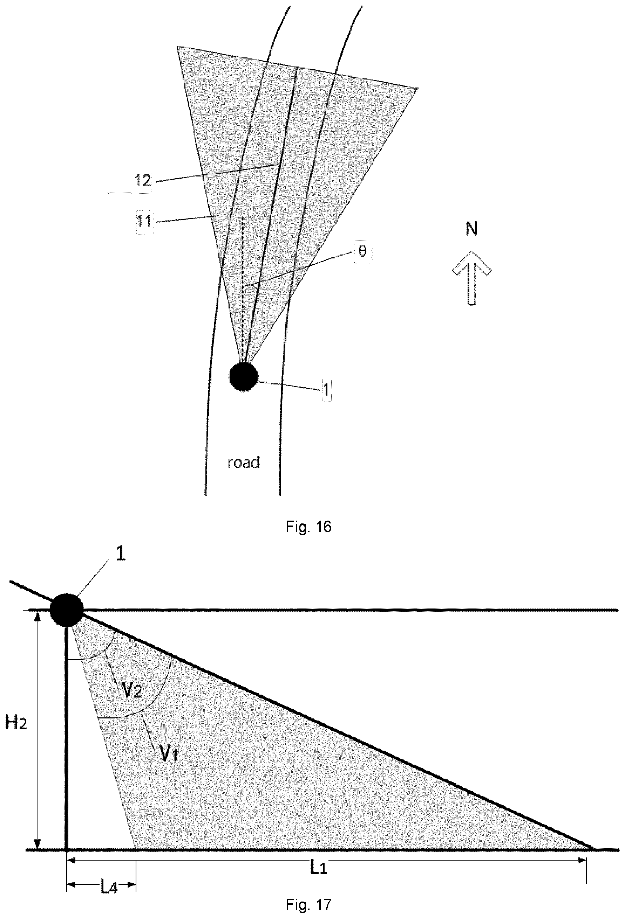

Please refer to Fig. 15, Fig. 16 and Fig. 17. In this embodiment, the rolling angle is $\alpha$, the pitching angle is $V_2$, and the yaw angle is $\theta$. The setting of the pitching angle and yaw angle enables the main beam direction of the radar-video integrated machine 1 to cover the area of the road section to be monitored, and the range of the rolling angle is 0°±0.5°. According to the testing requirements of the radar-video integrated machine 1, the rolling angle must be guaranteed to be close to 0°, that is, the radar-video integrated machine 1 is parallel to the horizontal plane. The yaw angle is mainly used to ensure that the main beam direction of the installed radar-video integrated machine 1 can cover the monitored road section. Please refer to Fig. 16, in Fig. 16, θ is the yaw angle of the radar-video integrated machine 1, that is, when the main beam of the radar-video integrated machine 1 can better cover the monitored road area, the angle between the symmetric axis 12 of the radar main beam deviates from the geomagnetic north direction, as shown in Fig. 16, the N direction is the geomagnetic north direction; In Fig. 17, the triangle shaded part is the area swept by the symmetry axis 12 of the radar main beam, and the pitch angle $V_2$ is used to control the detection distance of the radar-video integrated machine 1 and the range of multi-equipment networking in series, and its calculation formula is as follows:

$$V_2 = arctan\frac{L_1}{H_2} \qquad (1)$$

$$V_2\text{-}V_1 = arctan\frac{L_4}{H_2} \qquad (2)$$

In Formula (1), Formula (2) and Fig. 17, $H_2$: the installation height of the radar-video integrated machine 1; $L_1$: the coverage range of the radar-video integrated machine 1; $L_4$: the blind area near the end of the radar-video integrated machine 1; $V_1$: The angle formed by the radar beam 11 of the radar-video integrated machine 1 is the nature of the radar itself; $V_2$: the elevation angle of the radar-video integrated machine 1.

S2, technicians input mounting angle data, including rolling angle, yaw angle and pitch angle, and mounting angle error value, through the keys on the key module of the monitoring device, and signals with mounting angle data are synchronized to the measurement apparatus 3 through the first wireless communication module and the second wireless communication module; The key module has the function of data entry. Technicians respectively record the mounting angle data consisting of the rolling angle, yaw angle and pitch angle used for installation and the mounting angle error value into the monitoring device according to the calculation results in S1, and display them through the second display module. The second central controller transmits the mounting angle data to the measurement apparatus 3 through the second wireless communication module, and the measurement apparatus 3 receives the mounting angle data and the mounting angle error value through the first wireless communication module and displays them through the first display module.

S3. The installer installs the measurement apparatus 3 on the radar-video integrated machine 1, or installs it in advance. When installing, the measurement apparatus 3 can be fixed on the radar-video integrated machine 1 by using screws, or the measurement apparatus 3 can be fixed on the radar-video integrated machine 1 through the connection method in Embodiment 2. The installation position of the measurement apparatus 3 is the front panel of the radar-video integrated machine 1 facing the area to be tested. In this embodiment, the measurement apparatus 3 is fixed on the front panel by using screws. After installation, The installer and the radar-video integrated machine 1 move the measurement apparatus 3 and the radar-video integrated machine 1 to the position where they need to be installed by lifting the vehicle. The installer installs the pedestal or the bottom plate, which is the prior art, and then connects the radar-video integrated machine 1 to the pedestal or the bottom plate by screws for initial fixation. On the tunnel section, the radar-video integrated machine 1 is installed on the vault in the tunnel, while on the road, the radar-video integrated machine 1 is installed on the metal poles on both sides of the road.

Step S2 is an operation for technicians located on the ground, and step S3 is an operation for installers in high-altitude installation positions. These two steps can be interchanged in order or simultaneously.

S4, the installer keeps the radar-video integrated machine 1 and the measurement apparatus 3 still together, and the first central controller obtains the real-time rolling angle, yaw angle and pitch angle from the angle collection sensor 2 at a frequency above 10Hz, and displays them on the display of the first display module, so that the installer can conveniently determine the mounting angle data and make judgment through the first central controller; When the angle collection sensor 2 acquires the current angle data, the first central controller can work at a frequency above 1Hz, and its working frequency can be controlled in a certain range, and it can be adjusted to an appropriate value. On the premise of determining the number of sampling points, the minimum working frequency of the first central controller and the minimum time for each first status indicator lamp to light up at the same time in step S7 are inversely proportional, that is, the above two minimum values are inversely proportional, the higher the operating frequency, the shorter the time it takes for the above simultaneous lights to remain stable, and the relationship is as shown in formula (3) :

$$N = T_s \times f_s \qquad (3)$$

Where, N is the number of sampling points, $T_s$ is the time when each first status indicator lamp lights up at the same time and remains stable, that is, the sampling interval, and $f_s$ is the working frequency of the first central controller during sampling, that is, the sampling frequency.

In actual measurement, the actual working frequency can be increased, and the actual stable time can be extended. For example, at a certain working frequency, the stable time can be the minimum value, or it can be appropriately increased. Only when the first central controller is at a suitable working frequency can accurate data be collected. After the working frequency is set to 10Hz, the output of the angle collection sensor 2 can be more sensitive and the accuracy can be improved. By adjusting the working frequency of the first central controller and the time for keeping the first status indicator lamp stable to an appropriate configuration, based on the existing achievable working frequency, the time can be adjusted to be shorter, thus shortening the time and quickly completing the installation of the radar-video integrated machine 1.

The current angle error value is calculated by the first central controller. The calculation method of the current angle error value is to calculate the relative error. The following formulas (4), (5) and (6) are used to calculate the current angle error values of the roll angle, yaw angle and pitch angle respectively:

$$\Delta_{pitch} = \left| \frac{A_{pitch} - E_{pitch}}{E_{pitch}} \right| \times 100\% \qquad (4)$$

$$\Delta_{roll} = \left| \frac{A_{roll} - E_{roll}}{E_{roll}} \right| \times 100\% \qquad (5)$$

$$\Delta_{yaw} = \left| \frac{A_{yaw} - E_{yaw}}{E_{yaw}} \right| \times 100\% \qquad (6)$$

In the above formulas (4), (5) and (6), $\Delta_{pitch}$ is the current angle error value of pitch angle, $\Delta_{roll}$ is the current angle error value of roll angle, $\Delta_{yaw}$ is the current angle error value of yaw angle, $A_{pitch}$ is the actual pitch angle, $A_{roll}$ is the actual roll angle, $A_{yaw}$ is the actual yaw angle, $E_{pitch}$ is the pitch angle required for installation, and $E_{roll}$ is the roll angle required for installation, and $E_{yaw}$ is the yaw angle required for installation.

After calculating the current angle error value, the rolling angle, yaw angle and pitch angle are judged. The judgment process is as follows: the current angle error value is compared with the mounting angle error value required by installation, and if the current angle error value corresponding to the rolling angle, yaw angle and pitch angle is less than the mounting angle error value, the corresponding first status indicator lamp is turned on, and the installation of the radar-video integrated machine 1 is completed; If the current angle error value is greater than or equal to the mounting angle error value, the corresponding first status indicator lamp changes the light-emitting status to blink or go out.

S5. Through the first wireless communication module of the measurement apparatus 3, the first central controller sends the current angular data, the current angular error value and the status of each first status indicator lamp of the measurement apparatus 3 to the second wireless communication module of the monitoring device. The current angular data is the real-time rolling angle, yaw angle and pitch angle of the radar-video integrated machine 1 when it is adjusted in steps S3-S5. Wherein, each first status indicator lamp comprises three, namely, a first status indicator lamp indicating the rolling angle, a first status indicator lamp indicating the yaw angle and a first status indicator lamp indicating the pitch angle; a second central controller of the monitoring device receives the current angle data, the current angle error value and the signals of the status of each first status indicator lamp through a second wireless communication module, and then sends the current angle data to a second display module for display, And send that light emitting status signal to the synchronous light emitting status of the second status indicator lamp, that is, the second status indicator lamp receives the correspond light emitting instruction of the second central controller, lights up, and the second status indicator lamps correspond to each angle are synchronized with the light emitting status of the first status indicator lamp, that is, the second status indicator lamp indicating the rolling angle, the second status indicator lamp indicating the yaw angle and the second status indicator lamp indicating the pitch angle are light up.

S6, the installer adjusts the mounting angle data of the radar-video integrated machine 1 for adjusting according to the instructions of technicians, the installer and technicians can communicate and interact during the installation process, the technicians instruct the installer to install and adjust, the technicians can view the current angle data of the radar-video integrated machine 1 in real time, and the technicians supervise the installer until the radar-video integrated machine 1 is installed in place; Adjust the rolling angle, yaw angle or pitch angle corresponding to the radar-video integrated machine 1 until the first indicator lamp corresponding to each angle lights up. When adjusting the angle, the installer must adjust the three angles of the radar-video integrated machine 1 in sequence. It is necessary to adjust the rolling angle first, then adjust the yaw angle, so that the installation direction of the radar-video integrated machine 1 is consistent with the road direction. That is, adjust the angle between the radar main beam direction and the geomagnetic north direction of the radar-video integrated machine 1, and finally adjust the pitch angle of the radar-video integrated machine 1 by "lifting up" and "pressing down", and the pitch angle is the distance between the radiation range of the radar-video integrated machine; The sequence of the three angles reduces the adjusting time for adjusting the three angles, and ensures that the radar-video integrated machine 1 can be installed quickly, smoothly and accurately. Otherwise, the angles will be adjusted back and forth repeatedly due to incorrect angles. When the installer adjusts the rolling angle in place, the first status indicator lamp lights up, indicating that the rolling angle is adjusted accurately. The installer then adjusts the yaw angle and pitch angle in turn until all the three first status indicators corresponding to the pitch angle, rolling angle and pitch angle are lit up, and the first status indicator lamp lights up at the same time and remain stable for more than 2s. By adjusting the stability time of the first status indicator lamps, the time can be shortened, the network installation time of the radar-video integrated machine 1 can be effectively reduced, and the installation can be improved. When the error values of rolling angle, yaw angle, pitch angle and current angle all meet the requirements, and all the first status indicator lamps are light up at the same time for more than 10s to ensure that the radar-video integrated machine 1 will not deflect and remain stable after installation, it means that the radar-video integrated machine 1 is in place and its position is fixed. At this time, the adjusting is completed and the installation is finished.

Through the above steps, a single radar-video integrated machine 1 can be quickly adjusted after being installed in the designed position, and technicians can check the current angle data of the radar-video integrated machine 1 on the ground to guide the installer to install the radar-video integrated machine 1, which is convenient for the installer to adjust the angle, with faster adjusting speed and higher adjusting accuracy.

Embodiment 5

This embodiment is based on Embodiment 4. The difference between this embodiment and Embodiment 4 is that this embodiment also includes networking installation of the radar-video integrated machine 1.

The networking installation method of the installation device of the radar-video integrated machine for road uses the use method of the installation device of the radar-video integrated machine for road as in Embodiment 3, including steps S1-S6, and further including step S7:

S7. The networking installation of the radar-video integrated machine 1 for road is aimed at installing a plurality of radar-video integrated machines 1. After the installer installs the first radar-video integrated machine 1 according to steps S1-S6, the technician instructs the staff in the lift car to move the lift car to the next installation point, which is a pre-designed and determined location, which is located at the tunnel vault or on both sides of the road. Technicians calculate and determine the mounting angle data and mounting angle error value of the next installation position according to the installation drawings, which are used to install the next radar-video integrated machine 1, and install radar-video integrated machine 1 in turn according to steps S4-S6, and repeat this step until the installation of radar-video integrated machines 1 at the installation points in the construction section is completed.

There are two cases to determine the rolling angle, yaw angle and pitch angle of different road sections, one is when the road is a straight section, and the other is when the road is a curved section.

When the road is a straight section, the methods for determining the rolling angle, yaw angle and pitch angle are as follows:

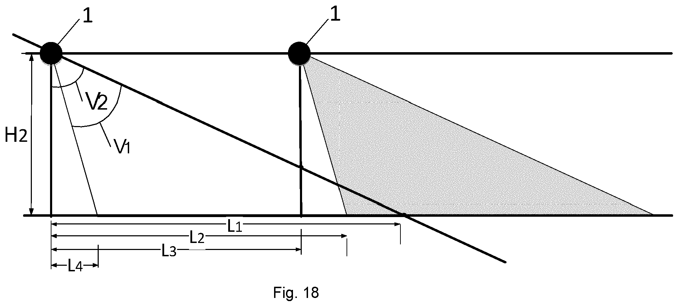

S71. The installed rolling angle is 0, and the setting of the rolling angle always keeps the radar-video integrated machine 1 stable, and the rolling angle is determined to always keep close to 0, that is, the left and right sides of the radar-video integrated machine 1 do not swing and remain stable; The installed yaw angle is the included angle between the road and the geomagnetic north direction, that is, in the extension direction of the road, a straight line intersects with the geomagnetic north direction, and the included angle between the two directions is the yaw angle, at this time, the extension direction of the road is consistent with the direction of the radar main beam symmetry axis 12; The installed pitch angle is in the vertical plane of the detection area of the radar-video integrated machine 1. The radar-video integrated machine 1 can adjust the angle of "lifting up" and "pressing down" by rotating, and calculate by formulas (1) and (2). As shown in Fig. 18, two adjacent radar-video integrated machines 1 respectively have a triangular shadow part, which is the area swept by the symmetry axis 12 of the radar main beam, where, in formula (1), formula (2), H2 : The installation height of radar-video integrated machines 1; $L_1$: the coverage range of radar-video integrated machine 1; $L_2$: the distance between the edge of the coverage area of one of the radar-video integrated machines and the orthographic projection of the adjacent radar-video integrated machines; $L_1$-$L_2$: minimum vehicle trajectory splicing calculation section length, which is a certain value; $L_3$: the actual installation distance between two adjacent radar-video integrated machines 1, which is determined by the installation drawings; $L_4$: the blind area near the end of the radar-video integrated machine 1; $V_1$: the angle formed by the radar beam 11 of the radar-video integrated machine 1 is the intrinsic property of the radar; $V_2$: the pitch angle of the radar-video integrated machine 1; Therefore, according to Fig. 18, the installation pitch angle $V_2$ can be obtained through the formula by determining the length of the radar coverage range of the radar-video integrated machine 1 and the installation height of the radar-video integrated machine 1.

When the road is a curved section, the methods for determining the rolling angle, yaw angle and pitch angle are as follows:

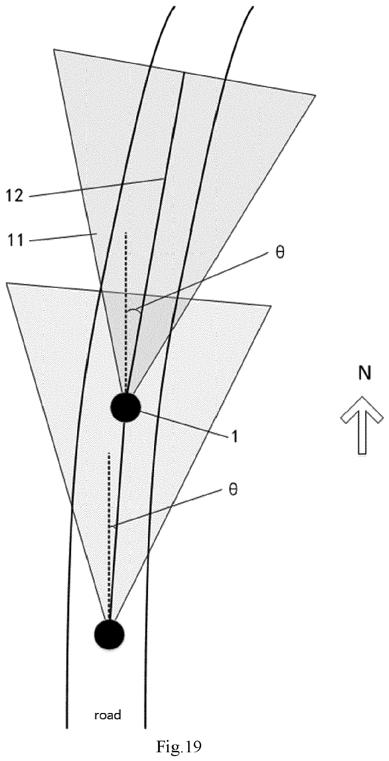

S72. The rolling angle and pitching angle of the installation are the same as those of a straight road, and the rolling angle is 0°, that is, the horizontal position is maintained. As shown in Fig. 18, when calculating the pitching angle, it is necessary to determine the pitching angle data of the installation of two adjacent radar-video integrated machines 1, and the pitching angles of the two adjacent radar-video integrated machines 1 are different, which should be determined according to the situation of covering the road and the pitching angle to be installed determined by technicians; The determination of the yaw angle is related to the road bending direction. The direction of the main beam symmetry axis 12 of the radar emitted by the radar-video integrated machine 1 is the direction of the connecting line from the radar position of the radar-video integrated machine 1 to the center of the road end in the area to be tested, which is used to determine the yaw angle. The road end in the area to be tested refers to one end of the whole road in the area to be tested, which is an upward road end along the radar and video collection area of the radar-video integrated machine 1, and its center is the center of the road centerline of this end position. The point where the symmetry axis 12 of the radar main beam hits the road is just at the center of the road. The yaw angles of two adjacent radar integrated machines 1, such as the yaw angle $\theta_1$ and the yaw angle $\theta_2$ in Fig. 19, are different when installing two adjacent radar integrated machines 1, so it is necessary to determine the yaw angle by combining the bending degree of the road with the geomagnetic north direction. The angle of one of the radar-video integrated machines 1 is determined as $\theta_1$, and the angle of the next radar-video integrated machine 1 is determined as $\theta_2$. When the road is gradually bent along the installation direction of the radar-video integrated machine 1, the more it deviates from the geomagnetic north direction, so that $\theta_2 > 0$. In Fig. 19, the N direction is the geomagnetic north direction.

The installer and the radar-video integrated machine 1 are lifted to the installation position together, and wait for the technicians to input the mounting angle data and the mounting angle error value. The installer adjusts the next radar-video integrated machine 1 through the mounting angle data displayed on the measurement apparatus 3, and sequentially installs the radar-video integrated machine 1 according to the above steps S4-S6, and repeats step S7 to complete the installation of the radar-video integrated machine 1 at the installation points of all construction sections. Through the installation personnel, a plurality of radar-video integrated machines 1 are sequentially installed and fixed along the road, so as to complete the networking installation of radar-video integrated machines 1, covering the road of the whole area to be monitored; The installation of the radar-video integrated machine 1 can be applied to straight and curved roads, which improves the applicability of the radar-video integrated machine 1 to different roads.

The above is only the preferred embodiment of the present invention, and it is not used to limit the present invention. Any modification, equivalent substitution and improvement made within the spirit and principle of the present invention should be included in the protection scope of the present invention.

## Claims

1. An apparatus for installingaradar-video integrated machine for road, characterized in thatincludes a measurement apparatus installed on the radar-video integrated machine and a monitoring device located on the ground, wherein the measurement apparatus includes a first central controller and an angle collection sensor, a first status indicator lamp, a first wireless communication module and a first display module electrically connected with the first central controller; the monitoring device comprises a second central controller and a key module, a second status indicator lamp, a second wireless communication module and a second display module which are electrically connected with the second central controller; the mounting angle data of the rolling angle, yaw angle and pitch angle required for installing the radar-video integrated machine are input through the key module, the mounting angle data are sent to the first display module through the second wireless communication module and the first wireless communication module for display, adjustthe rolling angle, yaw angle and pitch angle of the radar-video integrated machine, and collectthe current angle data of the rolling angle, yaw angle and pitch angle of the radar-video integrated machine through an angle collection sensor, the current angle data is sent to the second display module for display through the first wireless communication module and the second wireless communication module, and the first central controller judges whether the current angle data is consistent with the mounting angle data, if they are consistent, the radar-video integrated machine is adjusted in place, and the first status indicator lamp is adjusted in place through the light emitting status indication, and the light emitting status signal is sent to the second status indicator lamp through the first wireless communication module and the second wireless communication module to synchronize the light emitting status.

2. The apparatus for installingaradar-video integrated machine for roadaccording to claim 1, characterized in thatthe included angle between the plane where the angle collection sensor is located and the panel on the radar-video integrated machine facing the area to be tested is [80°, 100°], and the included angle between the plane where the angle collection sensor is located and the top panel of the radar-video integrated machine is [0°, 10° ].

3. The apparatus for installingaradar-video integrated machine for road according to claim 2, **characterized in that** the plane of the angle collection sensor is perpendicular to the panel facing the area to be tested on the radar-video integrated machine, and the plane of the angle collection sensor is parallel to the top panel of the radar-video integrated machine.

4. The apparatus for installingaradar-video integrated machine for road according to claim 2 or 3, **characterized in that** the reference direction of the rolling angle collected by the angle collection sensor is horizontal, the reference direction of the pitching angle is vertical to the road surface downward, the angular resolution of the pitching angle and the rolling angle collected by the angle collection sensor is $\geq 0.1°$ , the reference direction of the yaw angle is geomagnetic north, and the angular resolution of the yaw angle collected by the angle collection sensor is $\geq 0.5°$ .

5. The apparatus for installingaradar-video integrated machine for road according to claim 2 or 3, **characterized in that** the measurement apparatus has a casing, the side surface of which is provided with at least one suction disc for adsorption on the surface of the panel of the radar-video integrated machine, and the angle collection sensor is placed in the casing.

6. The apparatus for installingaradar-video integrated machine for road according to claim 1, **characterized in that** the first status indicator lamp and the second status indicator lamp indicate whether the current angle data is consistent with the mounting angle data through at least two different light emitting staus, wherein the light emitting staus include on, off or flashing, and when the first status indicator lamp and the second status indicator lamp are on, they can emit light of at least one color.

7. The apparatus for installingaradar-video integrated machine for road according to claim 6, characterized in thatthe key module is also used to input mounting angle error values of rolling angle, yaw angle and pitch angle. The current angle error value between the current angle data and the mounting angle data of the corresponding angle is displayed by the first display module, and the second display module synchronously displays the current angle error value through the first wireless communication module and the second wireless communication module; if the current angle error value is less than the mounting angle error value, then the first status indicator lamp is indicated by the light emitting staus, and if the current angle error value is more than or equal to the mounting angle error value, the first status indicator lamp is indicated by different light emitting staus or extinguishment.

8. The apparatus for installingaradar-video integrated machine for road according to claim 7, **characterized in that** the first status indicator lamp and the second status indicator lamp are both provided with at least three, which are respectively used to indicate whether the roll angle, yaw angle and pitch angle are adjusted in place.

9. The apparatus for installingaradar-video integrated machine for road according to claim 1, **characterized in that** further comprises a first watchdog module and a second watchdog module, wherein the first watchdog module is electrically connected to the first central controller and the second watchdog module is electrically connected to the second central controller, and the first watchdog module and the second watchdog module are respectively used for monitoring whether the measurement apparatus and the monitoring device are in normal working conditions.

10. The apparatus for installingaradar-video integrated machine for road according to claim 1, characterized in thatthe first display module and the second display module are digital display modules based on OLED, LCD, TFT or digital tube.

11. A method for using apparatus for installingaradar-video integrated machine for road, which uses the apparatus for installingaradar-video integrated machine for road according to claim 7, **characterized in that** comprising the following steps:

S1. according to the installation drawings of the radar-video integrated machine, determine the installation position of the radar-video integrated machine, the required mounting angle data: pitch angle, roll angle and yaw angle, and the mounting angle error value;

S2. input the mounting angle data and the mounting angle error value through the keys on the key module of the monitoring device, and synchronize the signals with the mounting angle data and the mounting angle error value to the measurement apparatus;

S3. move the measurement apparatus and the radar-video integrated machine to the position to be installed by lifting the car, and preliminarily fix the radar-video integrated machine in the installation position;

S4, the radar-video integrated machine and the measurement apparatus are kept still, the real-time rolling angle, yaw angle and pitch angle are obtained from the angle collection sensor through the first central controller and judged, and if the forward angle error values corresponding to the rolling angle, yaw angle and pitch angle are smaller than the mounting angle error values, the corresponding first status indicator lamp lights up; if the current angle error value is greater than or equal to the mounting angle error value, the corresponding first status indicator lamp changes the light emitting status or goes out;

S5. the first central controller sends the current angle data, the current angle error value and the light emitting status signal of the first status indicator lamp to the second wireless communication module through the first wireless communication module, and the second central controller obtains the data and signal through the second wireless communication module, sends the current angle data to the second display module for display, and sends the light emitting status signal to the synchronous light emitting status of the second status indicator lamp;

S6, according to the mounting angle data displayed by the first display module, adjust the pitch angle, roll angle and yaw angle of the radar-video integrated machine, and check the current angle data displayed by the first display module in real time until the radar-video integrated machine is installed in place; when the current roll angle, yaw angle and pitch angle, and the current angle error value all meet the requirements, all the first status indicator lamps light up and remain stable at the same time, which means that the current radar-video integrated machine is installed in place and the installation is over;

the sequence of step S2 and step S3 can be interchanged or synchronized.

12. The method for using apparatus for installingaradar-video integrated machine for road according to claim 11, **characterized in that** when adjusting the radar-video integrated machine in step S6, the pitch angle and yaw angle are adjusted so that the main beam direction of the radar-video integrated machine can cover the area of the road section to be monitored, and the rolling angle is $0°\pm0.5°$.

13. The method for using apparatus for installingaradar-video integrated machine for road according to claim 11, **characterized in that** in step S6, the adjustment of the radar-video integrated machine requires adjusting the rolling angle first, then the yaw angle, and finally the pitch angle until the corresponding first status indicator lights up.

14. The method for using apparatus for installingaradar-video integrated machine for road according to claim 11, **characterized in that** in step S4,the first central controller works at a frequency above 1Hz to collect the current angle data of the angle collection sensor.

15. The method for using apparatus for installingaradar-video integrated machine for road according to claim 11, **characterized in that** in step S6,each first status indicator lamp is on at the same time and kept stable for more than 2s.

16. The networking installation method of the apparatus for installingaradar-video integrated machine for road, using method for using apparatus for installingaradar-video integrated machine for road according to any one of claims 11-15, comprises the steps S1-S6, **characterized in that** further comprising:

S7. after installing the first radar-video integrated machine, lift the vehicle and move it to the next installation point; according to the installation angle data and the installation angle error value determined by the calculation of the installation drawings, the installation angle data and the installation angle error value are input through the monitoring device for installing the next radar-video integrated machine, and the radar-video integrated machine is installed in sequence according to steps S4-S6, and this step is repeated until the installation of all the radar-video integrated machine in the construction section is completed.

17. The networking installation method of the apparatus for installingaradar-video integrated machine for road according to claim 16, **characterized in that** in step S7,

when the road is a straight section, the methods for determining the rolling angle, yaw angle and pitch angle are as follows:

S71. the rolling angle of the installation is 0°, and the pitching angle of the installation is determined by the length of the road covered by the radar-video integrated machine and the installation height of the radar-video integrated machine, and the yaw angle of the installation is the included angle between the road and the geomagnetic north direction;

when the road is a curved section, the methods for determining the rolling angle, yaw angle and pitch angle are as follows:

S72. the installed rolling angle and pitching angle are the same as those in the case where the road is a straight section, and the yaw angle is determined by the included angle between the beam symmetry axis direction of the radar-video integrated machine and the geomagnetic north direction, wherein the beam direction of the radar-video integrated machine is the connecting line direction from the radar of the radar-video integrated machine to the center of the end of the highway in the area to be measured.

a measurement apparatus

angle collection sensor

a first central controller

a first display module —— OLED, LCD, TFT or digital tube

a first status indicator lamp

a first wireless communication module

An apparatus for installingaradar-video integrated machine for road

a second wireless communication module

a second status indicator lamp

a second display module —— OLED, LCD, TFT or digital tube

a second central controller

key module

a monitoring device

Fig. 1

radar-video integrated machine

installer → measurement apparatus

lift car

technicians → monitoring device

road

Fig. 2

key module

current angle data

a second display module

a second central controller

light emitting status signal

a second status indicator lamp

a second wireless communication module

a first wireless communication module

angle collection sensor

radar-video integrated machine

a first central controller

a first display module

mounting angle data

current angle data

judges whether consistent or not

Yes

No

adjust

a first status indicator lamp

**Fig. 3**

Fig. 4

**Fig.** 5

**Fig.** 6

a first status
indicator lamp

a first wireless
communication
module

a first central
controller

angle collection
sensor

a first display
module

power supply

**Fig. 7**

a second status
indicator lamp

a second wireless
communication
module

a second central
controller

key module

a second display
module

power supply

**Fig. 8**

**Fig.** 9

**Fig. 10**

a measurement apparatus

a first watchdog module

angle collection sensor

a first central controller

a first display module — OLED, LCD, TFT or digital tube

a first status indicator lamp

a first wireless communication module

An apparatus for installingaradar-video integrated machine for road

a second wireless communication module

a second status indicator lamp

a second display module — OLED, LCD, TFT or digital tube

a second central controller

key module

a second watchdog module

a monitoring device

**Fig. 11**

28

a first status indicator lamp

a first watchdog module

a first wireless communication module

angle collection sensor

a first central controller

a first display module

a first charging module

a first electric battery

a first step-down module

**Fig. 12**

a second status indicator lamp

a second watchdog module

key module

a second wireless communication module

a second central controller

a second display module

a second charging module

a second electric battery

a second step-down module

**Fig. 13**

S1. According to the installation drawings of the radar-video integrated machine, determine the installation position of the radar-video integrated machin, the required mounting angle data: pitch angle, roll angle and yaw angle, and the mounting angle error value;

S2. input mounting angle data and mouting angle data error value through the keys on the key module of the monitoring device, and signals with mounting angle data and mounting angle error value are synchronized to the measurement apparatus;

S3. Move the measuring device and the radar-video integrated machine together to position to be installed by lifting the car, and preliminarily fix the radar-video integrated machine in the installation position;

S4. The radar-video integrated machine and the measurement apparatus are kept static, and the real-time rolling angle, yaw angle and pitch angle are obtained from the angle collection sensor through the first central controller and judged;

S5. Through the first wireless communication module of the measurement apparatus, the first central controller sends the current angular data, the current angle error value and the state of each first status indicator lamp of the measurement apparatus to the second wireless communication module of the monitoring device,the current angle error value and the signals of the status of each first status indicator lamp through a second wireless communication module, and then sends the current angle data to a second display module for display;

S6. adjusts the rolling angle, yaw angle or pitch angle of the radar-video integrated machine according to the mounting angle data of the first display module;view the current angle data of the radar-video integrated machinein real time, and supervise until the radar-video integrated machineis installed in place, finish installing.

**Fig. 14**

Fig. 15

Fig. 16

Fig. 17

Fig. 18

12

11

θ

N

1

θ

road

Fig.19

<div align="center">

**INTERNATIONAL SEARCH REPORT**

</div>

| International application No. |
|---|
| **PCT/CN2022/106191** |

**A.　CLASSIFICATION OF SUBJECT MATTER**

　　G01C 1/00(2006.01)i;　G01S 13/91(2006.01)i;　G01S 7/02(2006.01)i;　H04L 67/12(2022.01)i

According to International Patent Classification (IPC) or to both national classification and IPC

**B.　FIELDS SEARCHED**

Minimum documentation searched (classification system followed by classification symbols)

　　G01C; G01S; H04L

Documentation searched other than minimum documentation to the extent that such documents are included in the fields searched

Electronic data base consulted during the international search (name of data base and, where practicable, search terms used)

　　CNABS; CNTXT; CNKI; VEN; ENTXT: 雷视, 监视, 监控, 摄像, 公路, 道路, 马路, 遥控, 无线, 安装, 角度, 指示灯, 发光, mount+, watch, vidicon, road, street, remote, control, wireless, fix, indicat+, light

**C.　DOCUMENTS CONSIDERED TO BE RELEVANT**

| Category* | Citation of document, with indication, where appropriate, of the relevant passages | Relevant to claim No. |
|---|---|---|
| PX | CN 113607127 A (CCCC FIRST HIGHWAY CONSULTANTS CO., LTD.) 05 November 2021 (2021-11-05)<br>　　claims 1-17 | 1-17 |
| Y | CN 110166747 A (SHENZHEN ZHONGDIAN YIWEI TECHNOLOGY CO., LTD.) 23 August 2019 (2019-08-23)<br>　　description, paragraphs [0034]-[0070], and figure 1 | 1-17 |
| Y | CN 204989983 U (GUANGDONG SOFTLINK MEDICAL INNOVATION CO., LTD.) 20 January 2016 (2016-01-20)<br>　　description, paragraphs [0015]-[0045], and figures 1-8 | 1-17 |
| Y | CN 107666595 A (ZHANGZHOU LILIPUT ELECTRONIC TECHNOLOGY CO., LTD.) 06 February 2018 (2018-02-06)<br>　　description, paragraphs [0013]-[0026], and figures 1-4 | 1-17 |
| A | CN 110988801 A (NEUSOFT REACH AUTOMOTIVE TECHNOLOGY (SHENYANG) CO., LTD.) 10 April 2020 (2020-04-10)<br>　　entire document | 1-17 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 September 2022** | **28 September 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/106191**

| Patent document cited in search report | | | Publication date (day/month/year) | Patent family member(s) | | | Publication date (day/month/year) |
|---|---|---|---|---|---|---|---|
| CN | 113607127 | A | 05 November 2021 | CN | 113607127 | B | 25 January 2022 |
| CN | 110166747 | A | 23 August 2019 | None | | | |
| CN | 204989983 | U | 20 January 2016 | None | | | |
| CN | 107666595 | A | 06 February 2018 | None | | | |
| CN | 110988801 | A | 10 April 2020 | None | | | |

Form PCT/ISA/210 (patent family annex) (January 2015)